(19) Europäisches Patentamt
European Patent Office
Office européen des brevets

(11) EP 1 261 255 B1

(12) **FASCICULE DE BREVET EUROPEEN**

(45) Date de publication et mention de la délivrance du brevet:
**06.06.2007 Bulletin 2007/23**

(21) Numéro de dépôt: **01913965.8**

(22) Date de dépôt: **08.03.2001**

(51) Int Cl.:
***A01N 47/02*** *(2006.01)* ***A01N 43/56*** *(2006.01)*

(86) Numéro de dépôt international:
**PCT/FR2001/000696**

(87) Numéro de publication internationale:
**WO 2001/065941 (13.09.2001 Gazette 2001/37)**

(54) **PROCEDE DE LUTTE CONTRE LES ARTHROPODES RAVAGEURS DES CULTURES ET COMPOSITION UTILE POUR CE PROCEDE**

ZUSAMMENSETZUNG UND VERFAHREN ZUR BEKÄMPFUNG VON PFLANZENSCHÄDLICHEN ARTHROPODEN

METHOD FOR FIGHTING AGAINST ARTHROPODS DESTRUCTIVE OF CROPS AND COMPOSITION THEREFOR

(84) Etats contractants désignés:
**AT BE CH CY DE DK ES FI FR GB GR IE IT LI LU MC NL PT SE TR**

(30) Priorité: **08.03.2000 FR 0002957**

(43) Date de publication de la demande:
**04.12.2002 Bulletin 2002/49**

(73) Titulaire: **BASF Agro B.V., Arnhem (NL), Wädenswil-Branch**
**8820 Wädenswil/Au (CH)**

(72) Inventeurs:
- **VALDEZ, Léopoldo, c/o Valdez Jovencia, C. 4031 Laguna (PH)**
- **TOLENTINO, Paul, 8F/F Philamlife Bldg 1770 Muntinlupa city (PH)**
- **LOBO, David 4031 Laguna (PH)**
- **BOSTIAN, Arlin F-69290 Craponne (FR)**
- **DICKMANN, Richard, 7th Floor, Bldg 2 Chaoyang District, Beijing 1000022 (CN)**

(74) Mandataire: **Köster, Reinhold et al**
**BASF Aktiengesellschaft**
**67056 Ludwigshafen (DE)**

(56) Documents cités:
**WO-A-95/22902** **WO-A-96/16543**
**US-A- 5 516 787**

- **CHEMICAL ABSTRACTS, vol. 130, no. 17, 26 avril 1999 (1999-04-26) Columbus, Ohio, US; abstract no. 219495, FUJIMOTO, IZUMI ET AL: "Insecticide compositions containing pyrethroids and fipronil for woods" XP002154072 & JP 11 049618 A (SUMITOMO CHEMICAL CO., LTD., JAPAN) 23 février 1999 (1999-02-23)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 1 261 255 B1

## Description

La présente invention concerne des procédés de lutte contre les arthropodes, particulièrement des procédés de lutte contre les insectes et notamment des procédés de lutte contre les insectes ravageurs des cultures, particulièrement de cultures de riz ou de cultures maraîchères ; de même que des procédés de protection des cultures, particulièrement des cultures de riz ; de même que des procédés visant à améliorer le rendement des cultures traitées ; ainsi que des compositions ou produits susceptibles d'être utilisés au cours de tels procédés.

Plus précisément, la présente invention concerne des procédés tels qu'évoqués plus haut et qui mettent en oeuvre des composés insecticides bien particuliers en association avec d'autres composés insecticides également particuliers , il s'agit le plus souvent de procédés combinant, de manière particulièrement avantageuse, l'action d'un composé insecticide (A) comprenant un groupement pyrazole et l'action d'un composé insecticide (B), particulièrement d'un composé insecticide de la famille des pyréthrinoïdes.

On connaît dans la littérature des procédés mettant en oeuvre des composés insecticides d'une grande variété. Toutefois, les composés insecticides connus et employés dans de tels procédés, bien que possédant certains effets insecticides, ne permettent souvent pas de remédier à nombre de problèmes rencontrés par les utilisateurs de tels produits, notamment les utilisateurs à la recherche de solutions particulières et adaptées à des usages bien spécifiques.

On connaît la demande de brevet internationale WO-95/22 902, décrivant certains procédés insecticides utiles pour la lutte contre les termites et qui mettent en oeuvre certains composés particuliers de la famille des fiproles avec des pyréthrinoïdes.

On connaît également, par la demande de brevet américain US-09/396 331, des procédés de lutte contre certains types particuliers de chrysomèles s'attaquant aux cultures de maïs et qui mettent en oeuvre un pyrazole particulier avec certains composés de la famille des pyréthrinoïdes.

JP 11-49618, et WO 96/16543 décrit des compositions notamment destinées au traitement des termites, lesquelles comprennent un mélange de fipronil et des certains pyréthroïdes.

US 5,516,787 décrit des compositions insecticides, lesquelles comprennent un pyréthrinoïde et un composé N-aryldiozole, utiles pour la lutte contre les insectes et acariens nuisibles.

Néanmoins ces demandes de brevet ne permettent pas d'apporter des solutions satisfaisantes aux problèmes qui peuvent se poser dans la lutte ou le contrôle de ravageurs des cultures, notamment au moyen de procédés insecticides particuliers.

Un des problèmes rencontrés dans la protection des cultures contre les arthropodes nuisibles, et notamment les insectes nuisibles, réside dans le besoin de réduire les quantités de matière active utilisées tout en permettant d'obtenir une efficacité similaire voire supérieure. En effet il est habituel d'épandre ou de mettre en oeuvre d'importantes quantités des dites matières actives insecticides.

Un autre problème rencontré concerne la nécessité de disposer de matières actives efficaces vis-à-vis d'un large spectre d'insectes nuisibles susceptibles de ravager ou d'endommager les cultures.

Un autre problème concerne l'effet dans le temps des matières actives mises en oeuvre pour la protection des cultures : il est à la fois désirable de disposer de matières actives qui possèdent une activité insecticide immédiate ou quasi immédiate après application sur les cultures, et, également, que ces dites matières actives possèdent un effet insecticide ayant une durée dans le temps suffisante pour permettre une protection efficace et durable des cultures contre les insectes nuisibles.

Un autre problème réside dans le fait que certaines matières actives insecticides ne possèdent pas d'effet insecticide immédiat mais n'agissent qu'après écoulement d'un certain temps après application, autorisant ainsi les populations d'insectes nuisibles à se multiplier avant que la matière active employée ne fasse effet.

Un autre problème résidant dans l'utilisation de certains composés insecticides connus est la difficulté de trouver un moyen permettant une lutte efficace contre un groupe de plusieurs insectes nuisibles susceptibles de s'attaquer à une culture particulière.

Il est notamment particulièrement difficile d'apporter un moyen de lutte insecticide efficace contre un ensemble d'insectes nuisibles ravageant les cultures de riz, notamment contre les insectes nuisibles des familles *Delphacidae, Noctuidae, Plutellidae, Pyralidae, Tortricidae.*

Aux nombreux problèmes qui viennent d'être exposés, s'ajoutent le plus souvent ceux liés à la protection de l'environnement, problèmes environnementaux auxquels sont de plus en plus sensibilisés les utilisateurs de matières actives insecticides, de même que les consommateurs des produits issus de ces cultures.

Une autre difficulté relative à l'utilisation de nombreuses matières insecticides réside dans l'accumulation de plusieurs des problèmes qui viennent d'être exposés. Il est, en effet, encore plus difficile de résoudre les problèmes posés lorsqu'ils se cumulent car les solutions envisageables sont parfois antinomiques voire antagonistes.

Par ailleurs et de manière générale, il est toujours désirable d'améliorer le spectre d'activité et l'efficacité des composés à action insecticide, ou de renforcer les dits spectres d'activité et d'efficacité, en associant les dits composés afin d'obtenir une association ou un produit plus performant ainsi que des procédés de lutte ou de contrôle des ravageurs

des cultures qui soient adaptés au mieux aux attentes spécifiques des utilisateurs.

Il est également toujours désirable de fournir à l'utilisateur de ces composés insecticides une gamme élargie de moyens insecticides de lutte ou de contrôle des insectes nuisibles, particulièrement dans le domaine de l'agriculture, notamment du fait des ravages que peuvent faire ces insectes nuisibles aux cultures.

Il est également très désirable d'améliorer ou de contrôler au mieux la vitesse ou la persistance d'action de ces composés insecticides.

Il est également des plus désirables de fournir des moyens de lutte insecticides qui possèdent un effet insecticide dit effet choc, le dit effet choc consistant au sens du présent texte en un effet rapide de l'action insecticide, le plus souvent mesurée par une diminution rapide du nombre d'insectes. De manière préférée, un tel effet choc est reconnu pour des matières actives dont action insecticide satisfaisante apparaît en quelques heures.

Ainsi, la présente invention se propose d'apporter des solutions en tout ou partie aux nombreux problèmes qui viennent d'être exposés. La présente invention se propose également d'atteindre en tout ou partie les objectifs qui viennent d'être mentionnés.

Les procédés selon l'invention mettent en oeuvre un composé insecticide (A) de formule (I)

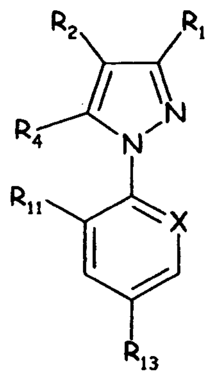

(I)

dans laquelle:

$R_1$ représente -*C*N ou le radical méthyle ou le radical -*C*(S)$NH_2$ ou le radical -*C*(=N-*Y*)Z;
$R_2$ représente -$S(O)_nR_3$ ;
$R_3$ représente un radical alkyle ou haloalkyle;
$R_4$ est choisi parmi le groupe comprenant l'atome d'hydrogène, un atome d'halogène, et un radical qui peut être -$NR_5R_6$, -*C*(*O*)$OR_7$, -*S*(*O*)$_mR_7$, alkyle, haloalkyle, -*O*$R_8$, ou -N=*C*($R_9$)($R_{10}$):
$R_5$ et $R_6$ sont indépendamment choisis parmi l'atome d'hydrogène, un radical alkyle, haloalkyle, -*C*(O)alkyle, -*C*(*O*)$OR_7$, -S(*O*)$_r$*C*$F_3$ : ou $R_5$ et $R_6$ forment ensemble un radical divalent qui peut être interrompu par un ou plusieurs hétéroatomes;
$R_7$ est choisi parmi un radical alkyle et un radical haloalkyle ;
$R_8$ est choisi parmi un radical alkyle, un radical haloalkyle et l'atome d'hydrogène;
$R_9$ est choisi parmi l'atome d'hydrogène et un radical alkyle ;
$R_{10}$ est choisi entre un radical phényle et hétéroaryle éventuellement substitué par un ou plusieurs radicaux hydroxy, atomes d'halogènes, -O-alkyles, -S-alkyles, cyano ou alkyle ou une combinaison de ceux-ci ;
X est choisi parmi l'atome d'azote et le radical *C*-$R_{12}$ ;
y est choisi parmi les groupements hydroxy, amino, amino-carbonyles, alkoxy, aryl-carbonyles, alkyl-carbonyles, alkoxy-carbonyles, carbamoyles, aryl-carbamoyles, alkyl-carbamoyles, pyrazoles substitués ou non ;
Z est choisi parmi les groupements hydroxy, amino, amino-carbonyles, alkoxy, aryl-carbonyles, alkyl-carbonyles, alkoxy-carbonyles, carbamoyles, aryl-carbamoyles, alkyl-carbamoyles ;
$R_{11}$ et $R_{12}$ sont indépendamment choisis parmi un atome d'halogènes ou l'atome d'hydrogène;
$R_{13}$ est choisi parmi un atome d'halogènes, un radical haloalkyle, haloalkoxy, -$S(O)_qCF_3$, et -$SF_5$ ;
m, n, q, r sont indépendamment choisis parmi 0, 1 et 2 ;
avec la restriction que lorsque $R_1$ représente le radical méthyle alors $R_3$ représente un radical haloalkyle, $R_4$ représente -$NH_2$, $R_{11}$ représente *C*l, $R_{13}$ représente -*C*$F_3$, et X représente N ;
les radicaux alkyle et alkoxy de la formule (I) sont de préférence des radicaux alkyle et alkoxy inférieurs, c'est à dire, des radicaux possédant de un à quatre atomes de carbone ;

les radicaux haloalkyle et haloalkoxy possèdent de même de préférence de un à quatre atomes de carbone ; les radicaux haloalkyle et haloalkoxy peuvent porter un ou plusieurs atomes d'halogènes ; les radicaux préférés de ce type comprennent $-CF_3$ et $-OCF_3$.

Selon une variante préférée, les procédés selon l'invention mettent en oeuvre un composé insecticide (A) de formule (I) dans laquelle:

$R_1$ représente -CN, et/ou
$R_4$ représente $-NR_5R_6$ ; et/ou
$R_5$ et $R_6$ sont indépendamment choisis parmi l'atome d'hydrogène, un radical alkyle, haloalkyle et -C(O)alkyle ; et/ou
X représente $-C-R_{12}$ ; et/ou
$R_{13}$ est choisi parmi un atome d'halogène, un radical haloalkyle, haloalcoxy, et $-SF_5$.

Selon une variante tout particulièrement avantageuse, les procédés de protection ou de traitement selon l'invention mettent en oeuvre du fipronil, de nom chimique 5-amino-3-cyano-1-(2,6-dichloro-4-trifluorométhylphényl)-4-trifluorométhyl-sulfinyl-pyrazole, comme composé insecticide (A).
Selon un autre mode de mise en oeuvre avantageux des procédés selon l'invention, le composé (B) employé est un composé de formule (II)

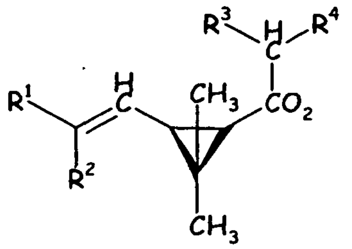

(II)

dans laquelle :

$R_1$ et $R_2$ représentent, indépendamment, un radical alkyle de $C_1$ à $C_8$ ou un radical halogénoalkyle de $C_1$ à $C_8$ ou un atome d'halogène ou un groupement phényle, substitué ou non ; et/ou
$R_3$ représente un groupement -CN ou un atome d'hydrogène ou un radical alkyle de $C_1$ à $C_8$ ; et/ou
$R_4$ représente un groupement phényle, substitué ou non.

Selon un autre mode de mise en oeuvre avantageux, le composé (B) employé au cours des procédés selon l'invention est un composé de formule (II) dans laquelle -

$R_1$ et $R_2$ représentent, indépendamment, un atome de brome ou un atome de chlore ou un radical méthyle ou un radical iso-propyle ou un radical para-chloro-phényle ou un radical trifluorométhyle : et/ou
$R_4$ représente un groupement phénoxybenzyle, substitué ou non.

Selon un autre mode de mise en oeuvre avantageux, le composé (B) employé pour les procédés selon l'invention est un composé de formule (II) dans laquelle:

$R_4$ représente un groupement halogénophénoxybenzyle.

Le cas échéant et lors de sa mise en oeuvre au sein des procédés selon l'invention, le composé (B) de formule (II) peut l'être tant sous la forme d'un isomère particulier que d'un mélange de plusieurs isomères, voire sous la forme d'un mélange de plusieurs composés de formule (II).
Néanmoins pour ce qui concerne les composés de la famille des pyréthrinoïdes qui sont utilisés au titre de composé insecticide (B) lors de la mise en oeuvre des procédés de protection ou de traitement selon l'invention, on préfère utiliser les composés choisis dans le groupe comprenant

la bifenthrin ou 2-methylbiphenyl-3-ylmethyl-(Z)-(1RS,3RS)-3-(2-chloro-3,3,3-trifluoroprop-1-enyl)-2,2-dimethylcyclopropanecarboxylate ;
la cyfluthrin ou (R,S)-α-cyano-4-fluoro-3-phenoxybenzyl (1RS,3RS:1RS,3SR)-3-(2,2-dichlorovinyl)-2,2-dimethylcyclopropanecarboxylate ;
la cyhalothrin ou (R,S)-α-cyono--3-phenoxybenzyl (Z)-(1RS,3RS)-(2-chloro-3,3,3-trifluoropropenyl)-2,2-dimethylcyclopropnnecarboxylate ;
la cypermethrin ou (R,S)-α-cyano-3-phenoxybenzyl (1R5,3RS;1RS,3SR)-3-(2,2-dichlorovinyl)-2,2-dimethylcyclopropanecarboxylate ;
l'alpha-cypermethrin ou mélange racémique comprenant du (S)-α-cyano-3-phenoxybenzyl (1R,3R)-3-(2,2-dichlorovinyl)-2,2-dimethylcyclopropnnecarboxylate et du (R)-α-cyano-3-phenoxybenzyl (15,35)-3-(2,2-dichlorovinyl)-2,2-dimethylcyclopropanecar-boxylate ;
la beta-cypermethrin ou mélange réactionnel comprenant, en un rapport 2 :3, les 2 couples énantiomériques (S)-α-cyano-3-phenoxybenzyl (1R)-cis-3-(2,2-dichlorovinyl)-2,2-dimethylcyclopropanecarboxylate et (R)-α-cyano-3-phenoxybenzyl (1S)-cis-3-(2,2-dichlorovinyl)-2,2-dimethylcyclopropanecarboxylate avec (S)-α-cyano-3-phenoxybenzyl (1R)-trans-3-(2,2-dichlorovinyl)-2,2-dimethylcyclopropanecarboxylate et (R)-α-cyano-3-phenoxybenzyl (15)-trans-3-(2,2-dichlorovinyl)-2,2-dimethylcyclopropanecarboxylate ;
la theta-cypermethrin ou mélange des énantiomères (R)-α-cyano-3-phenoxybenryl (15,3R)-3-(2,2-dichlorovinyl)-2,2-dimethylcyclopropanecorboxylote et (S)-α-cyano-3-phenoxybenzyl (1R,35)-3-(2,2-dichlorovinyl)-2,2-dimethylcyclopropanecarboxylate en un rapport 1 :1 ;
la zeta-cypermethrin ou mélange des stéréo-isomères (S)-α-cyano-3-phenoxybenzyl (1R5,3RS;1RS,3SR)-3-(2,2-dichlorovinyl)-2,2-dimethylcyclopropanecarbo-xylate, mélange dans lequel le rapport des couples énantiomériques (S)-(1RS,3RS) et (S)-(1RS,3SR) est respectivement compris entre 45-55 et 55-45 ;
la deltamethrin ou (S)-α-cyano-3-phenoxybenzyl (1R,3R)-3-(2,2-dibromovinyl)-2,2-dimethylcyclopropanecarboxylate;
la fenpropathrin ou (RS)-α-cyono-3-phenoxybenzyl 2,2,3,3-tetramethylcyclopropa-necarboxylate;
le fenvalerate ou (RS)-α-cyano-3-phenoxybenzyl (RS)-2-(4-chlorophenyl)-3-methylbutyrate;
la flumethrin ou α-cyano-4-fluoro-3-phenoxybenzyl 3-(β,4-dichlorostyryl)-2,2-dimethylcyclopropanecarboxylate;
la permethrin ou 3-phenoxybenzyl (1RS,3RS;1RS,3SR)-3-(2,2-dichlorovinyl)-2,2-dimethylcyclopropanecarboxylate ;
la phenothrin ou 3-phenoxybenzyl (1RS,3RS:iRS,3SR)-2,2-dimethyl-3-(2-methylprop-1-enyl)cyclopropnnecarboxylate ;
la tefluthrin ou 2,3,5,6-tetrafluoro-4-methylbenzyl (Z)-(1RS,3R5)-3-(2-chloro-3,3,3-trifluoroprop-1-enyl)-2,2-dimethylcyclopropanecarboxylate ;
la tralomethrin ou (S)-α-cyono-3-phenoxybenzyl (1R,3S)-2,2-dimethyl-3-[(RS)-1,2,2,2-tetrabromoethyl]cyclopropanecarboxylate ;
le flucythrinate ou (RS)-α-cynno-3-phenoxybenzyl (S)-2-(4-difluoromethoxyphenyl)-3-methylbutyrate :
le tau-fluvalinate ou (RS)-α-cyano-3-phenoxybenzyl N-(2-chloro-α,α,α-trifluoro-p-tolyl)-D-valinnte.

Par ailleurs, les composés de la famille des pyréthrinoïdes qui peuvent être utilisés lors de la mise en oeuvre des procédés selon l'invention sont, pour certains, connus en soi comme ayant certaines propriétés insecticides ou comme ayant une activité insecticide, tout en étant acceptables pour des usages en agriculture, notamment pour le traitement ou la protection des cultures.

Au sein des différentes variantes de procédés selon la présente invention, les composés insecticides (A) et (B) sont mis en oeuvre dans des quantités efficaces mais non phytotoxiques.

Concernant les composés insecticides (A) à groupe pyrazole mis en oeuvre dans les différents procédés selon la présente invention, on pourra également se reporter à ceux respectivement décrits par les brevets ou demandes de brevet européen EP-O 295 117, EP-O 460 940 ou EP-0 484 165 ; de même que dans la demande de brevet internationale WO-98/28 279.

On pourra, par ailleurs se reporter à l'ouvrage The Electronic Pesticide Manual version 1.0 (du British Crop Protection Council, édité par Clive Tomlin) pour ce qui concerne des procédés de préparation des composés insecticides (B).

Sauf précision contraire et pour l'ensemble du présent texte, les composés insecticides (A) et (B) mis en oeuvre peuvent indifféremment être désignés par l'une quelconque des expressions : matières actives ou encore composés ou composés insecticides ou substances actives ou substances insecticides, sans pour autant se départir de l'esprit de la présente invention, notamment du fait des propriétés insecticides de ces composés, substances ou matières.

De manière préférée et pour leur emploi dans la pratique lors de la mise en oeuvre des procédés selon la présente invention, les différentes substances insecticides (A) et (B) décrites précédemment sont rarement utilisées seules.

Ainsi, pour leur mise en oeuvre dans les procédés selon l'invention, les matières actives insecticides (A) et (B)

sont habituellement associées à un support, solide ou liquide, utilisable notamment dans le domaine de l'agriculture, et éventuellement à au moins un agent tensioactif et/ou un ou plusieurs agents auxiliaires.

Ces procédés selon l'invention, utiles notamment pour la protection des végétaux contre les insectes, mettent en oeuvre comme matière active au moins un des composés insecticides (A) ou (B) tels que décrits précédemment, avantageusement en combinaison avec les supports solides ou liquides, acceptables en agriculture et/ou les agents tensioactifs également acceptables en agriculture.

En particulier, comme supports, sont utilisables les supports inertes et usuels ; de même que, comme agents tensioactifs, sont utilisables les agents tensioactifs usuels dans le domaine de la mise en formulation de compositions destinés à des usages en agriculture, notamment pour le traitement ou la protection des cultures tels que ceux de la présente invention.

Une description plus détaillée des différents composés ou adjuvants qui, au sens de la présente invention, peuvent être associés aux composés (*A*) et (B) fera l'objet d'un développement spécifique plus avant dans le présent texte.

De manière habituelle, les procédés selon l'invention mettent en oeuvre des formulations comprenant entre 0,00001 et 100%, de préférence entre 0,001 et 80%, de composés insecticides (A) et (B), que ces composés soient associés, ou qu'ils soient sous la forme de deux matières actives utilisées séparément.

Toutefois, le plus souvent, les procédés selon l'invention associent de façon simultanée un composé insecticide (A) et un composé insecticide (B).

Sauf précision contraire, les proportions et pourcentages employées ou décrits, tant tout au long du présent exposé, que dans les revendications qui suivront, sont des proportions ou pourcentages en poids.

Plus généralement lors de leur mise en oeuvre au sein des procédés selon l'invention, les composés insecticides (A) et (B) peuvent être associés à tous les additifs solides ou liquides correspondant aux techniques habituelles de la mise en formulation, particulièrement la mise en formulation de produits ou compositions destinées à des usages ou à des utilisations en agriculture.

Parmi les procédés ou méthodes de traitement et/ou de protection selon l'invention, sont préférés ceux qui sont mis en oeuvre pour le traitement et/ou la protection des cultures.

La dite mise en oeuvre des procédés selon l'invention peut être réalisée selon différents formes et notamment en utilisant une assez grande variété de modes d'application, mais également selon différentes techniques d'application, ou bien pour la protection de différents types, variétés ou familles de végétaux ou de plantes, ou encore pour la lutte ou le contrôle de différents types ou espèces d'arthropodes, particulièrement d'insectes nuisibles.

Pour ce qui concerne les différents modes d'application utilement mis en oeuvre au cours des procédés selon l'invention, sont notamment possibles des modes d'application simultanée, séparée, alternée ou séquencée.

Néanmoins, le plus souvent, les modes d'application utiles au cours des procédés selon l'invention et qui sont préférés, consistent en des modes d'application des composés insecticides (A) et (B) de manière simultanée.

Toutefois une variante relativement avantageuse de procédé selon l'invention, met en oeuvre un mode d'application alterné des composés insecticides (A) et (B).

Un autre mode d'application utile pour la mise en oeuvre des procédés selon l'invention concerne l'application séquencée des composés insecticides (A) et (B) ; un tel mode d'application séquencé peut notamment prendre la forme de plusieurs applications de composé insecticide (A), puis de plusieurs applications de composé insecticide (B). Bien évidemment, un mode d'application séquencé inversé consistant en plusieurs applications de composé insecticide (B), puis de plusieurs applications de composé insecticide (A) fait également partie des procédés de la présente invention.

Les différentes variantes de mise en oeuvre des procédés selon l'invention qui viennent d'être décrites peuvent également être combinées ou associées, entièrement ou partiellement, les unes aux autres. L'homme de l'art saura aisément déterminer les associations ou combinaisons de modes d'application selon l'invention qui conviennent le mieux à l'usage des composés insecticides (A) et (B) qu'il envisage.

Outre les différents modes de mise en oeuvre des procédés selon l'invention qui viennent d'être décrits, les dits procédés peuvent également utiliser d'assez nombreuses techniques d'application ; ainsi, comme dites techniques, peuvent notamment être citées, le poudrage, le trempage, la pulvérisation, le fumage ou encore la brumisation, etc.

D'autres variantes des modes d'application utiles pour les procédés selon l'invention existent, particulièrement selon la ou les parties de la plante ou du végétal qui sont traitées ou à traiter.

Ainsi, les procédés selon l'invention peuvent être mis en oeuvre pour le traitement ou la protection du matériel de propagation végétal ou des semences, notamment les graines, les tubercules ou les rhizomes; pour le traitement des racines, ou pour le traitement des tiges ou des feuilles de la plante: de même que pour le traitement des racines, ou encore autres parties de la plante possédant une substantielle valeur économique ou agronomique.

De plus, les dits procédés selon l'invention peuvent être mis en oeuvre pour le traitement des plantes à de nombreux stades de leur développement, notamment pour le traitement des semences, des semis ou des semis de repiquage ou des plants de repiquage, ou encore des plants.

Les procédés qui sont mis en oeuvre pour le traitement du sol en culture ou à cultiver font également partie de la présente invention.

Néanmoins et de manière particulièrement avantageuse, les procédés selon l'invention mettent en oeuvre les composés insecticides (A) et (B) pour le traitement par application foliaire sur la plante à traiter. De manière encore plus avantageuse, un tel traitement est réalisé par pulvérisation.

De la même manière, les dits procédés selon l'invention pour le traitement de semence sont particulièrement avantageux.

Les procédés de traitement ou de protection des plantes selon l'invention au moyen des composés insecticides (*A*) et (B) sont mis en oeuvre pour le traitement ou la protection céréalières ou maraîchères, particulièrement du riz, du blé, de l'orge ou du seigle, de même que pour le traitement ou la protection du maïs, du sorgho, du tournesol, du soja, ou encore du coton, du pois, du colza, de pommes de terre, des cultures légumières, des betteraves, des oignons, des choux, des tomates, des haricots, des salades, etc.

Les dits procédés de traitement ou de protection des plantes selon l'invention donnent des résultats particulièrement avantageux lorsque mis en oeuvre pour le traitement du riz. Des résultats particulièrement avantageux sont obtenus avec de nombreuses variétés de riz, que ces variétés soient des variétés hybrides ou non. Les procédés selon l'invention utilement mis en oeuvre pour le traitement ou la protection de la variété *Oryza sativa* donnent également des résultats des plus satisfaisants.

Comme cela peut ressortir des précédents développement du présent texte, les procédés selon l'invention peuvent être utiles tant pour des traitements à titre préventif, que pour des traitements à titre curatif.

Les procédés selon l'invention mettant en oeuvre un composé insecticide (A) et un composé insecticide (B) sont avantageusement mis en oeuvre pour la lutte ou le contrôle d'arthropodes nuisibles, particulièrement d'insectes nuisibles.

Ainsi, les dits procédés selon l'invention sont avantageusement mis en oeuvre pour la lutte ou le contrôle des insectes des familles *Delphacidae sp.,* notamment *Nilaparvata lugens Nilaparvata, oryzae* et *Sogatella furcifera ;* et/ou *Cicadellidae sp.* notamment *Empoasca decipiens, Nephotettix apicalisi, Nephotettix impicticeps, Nephotettix cincticeps* et *Nilaparvata oryzae:* et/ou *Pyralidae sp.,* notamment *Tryporyza incertulas, Tryporyza innotata, Cnaphalocrosis medinalis, Chilo loftini, Chilo suppressalis, Chilo indicus* et *Chilatraea plejadellus : Tylenchidae sp.,* notamment *Ditylenchus dipsaci, Ditylenchus angustus* et *Ditylenchus radicicolus:* et/ou *Noctuidae sp.,* notamment *Sesamia interens, Sesatnia calamistis, Sesamia cretica* et *Spodoptera litura;* et/ou *Pentatomidae sp.* notamment *Scotinophara lurida* et *Scotinophara coarctata ;* et/ou *Plutellidae sp.* notamment *Ptutella xylostella ;* et/ou *Tortricidae sp.* notamment *Arcfrips breviplicanus ;* et/ou *Cecidomyiidae sp.* notamment *Orselia oryzae* et *Pachydiplosis oryzae.*

Selon un autre mode de mise en oeuvre les procédés selon l'invention sont avantageusement utilisés pour la lutte contre les insectes du sol et notamment contre les insectes du sol dont un stade de la vie à lieu dans le sol de façon dommageable pour les cultures.

Ainsi, parmi de tels insectes du sol, peuvent être mentionnés *Aeneolamia sp., Agrotis sp., Agriotes sp., Araecerus sp., Aulacophora sp., Atherigona sp., Cerotoma sp., Chilo sp., Cylas sp., Delia sp., Diabrotica sp., Diaprepes sp., Elasmopalpus sp., Frankliniella sp., Graphognathus sp., Gryllotalpa sp., Hypomeces sp., Heteronychus sp., Holotrichia sp., Hydraecia sp., Hylemia sp., Leucopholis sp., Lepidiota sp., Limonius sp., Listroderes sp., Loxostege sp., Mamestra sp., Melolontha sp., Oscinella sp., Ostrinia sp., Otiorhynchus sp., Phyllophaga sp., Phyllotreta sp., Popillia sp., Pseudococcus sp., Psila sp., Psylloides sp., 5itono sp., Spolodea sp., Tanymecus sp., Thrips* et *Tribolium sp.*

Ou bien encore les procédés selon l'invention sont très avantageux

- contre les lépidoptères, notamment *Pectinophora gossypiella, Bupalus piniarius, Cheimatobia brumata, Lithocolletis blancardella, Hyponomeuta padella, Plutella sp.,* par exemple *Plutella xylostella, Molacosoma neustria, Euproctis chrysorrhoea, Lymantria sp.,* par exemple *Bucculatrix thurberiella, Phyllocnistis citrella, Agrotis sp.,* par exemple *Agrotis segetum, Agrotis ipsilon, Euxoa sp., Feltia sp., Earias insulana, Heliothis sp.,* par exemple *Helicoverpa armigera, Helicoverpa armigera, Helicoverpa zea, Lophygma exigua, Momestra brassicae, Panalis flammea, Prodenia litura, Spodoptera sp.,* par exemple *spodoptera littoralis, Spodoptera litura, spodoptera exigua, Trichoplusia ni, Cydia pomonella, Pieris sp., Chilo sp.,* par exemple *Chilo suppressalis, Pyrausta nubilolis, Ephestia kuehniella, Galleria mellonella, Cacoecia podana, Capua reticulana, Choristoneura fumiferana, Clysia ambiguella, Hofmannophila pseudospretella, Homona magnanima, Tineola bisselliella, Tinea pellionella, Elasmopalpus sp., Hydraecia sp., Loxostege sp., Ostrinia sp., Spoladea sp.,* par exemple *Tortrix viridana;*
- contre les coléoptères, notamment *Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica sp.,* par exemple *Diabrotica undecimpunctata, Diabrotica virgifera, Psylloides chrysocephala, Epilachna varivestis, A tomaria sp.,* par exemple *A tomaria linearis, Oryzaephilus surinamensis, Anthonomus sp.,* par exemple *Anthonomus grandis, Otiorhynchus sulcatus, Cosmopolites sordidus, Ceuthorrynchus assimilis, Hypera postica" Dermestes sp., Trogoderma sp., Anthrenus sp., Attagenus sp., Lyctus sp.,* par exemple *Meligethes aeneus, Ptinus sp.,* par exemple *Niptus hololeucus, Gibbium psylloides, Tribolium sp.,* par exemple *Tenebrio molitor, Agriotes sp.,* par exemple *Agriotes lineatus, Conoderus sp.,* par exemple *Melolontha melolontha, Amphimallon solstitialis,*

*Aeolus sp., Araecerus sp., Aulacophora sp., Cerotoma sp., Chaetocnema sp., Cylas sp., Diaprepes sp., Graphognathus sp., Heteronychus sp., Holotrichia sp., Hypomeces sp., Leucopholis sp., Lepidiota sp., Limonius sp., Listroderes sp., Melanotus sp., Phyllotreta sp., Phyllophaga sp., Popillia sp., Sitona sp., Tanymecus sp.,* par exemple *Costelytra zealandica;* ou

- contre les diptères et notamment *Drosophila melanogaster, Chrysomyxa sp., Hypoderma sp., Tannia sp., Bibio hortulanus, Oscinella frit, Phorbia sp., Pegomyia hyoscyami, Ceratitis capitata, Dacus oleae, Tipula sp., Tipula paludosa, Atherigona sp., Delia sp., Hylemia sp., Psila rosae, Tipula oleracea.*

Selon une utilisation préférée des procédés selon l'invention, ceux ci sont mis en oeuvre pour la lutte simultanée contre plusieurs des insectes nuisibles mentionnés ; on parle alors de procédés de lutte contre un groupe de ravageurs.

Selon une mise en oeuvre encore plus préférée, de tels procédés de lutte ou de traitement contre un groupe de ravageurs sont mis en oeuvre pour le traitement ou la protection d'une culture déterminée.

De manière encore plus préférée, les procédés selon l'invention sont mis en oeuvre dans des procédés de lutte ou de traitement contre les insectes ravageurs des cultures de riz.

Les procédés de contrôle ou de lutte contre les insectes nuisibles selon l'invention peuvent être mis en oeuvre aux différents stades de la vie ou du développement des insectes, notamment contre les oeufs, les larves quel qu'en soit le stade de développement, les chrysalides ou les nymphes, ou encore contre les arthropodes ou les insectes au stade adulte.

Par ailleurs, les dits procédés peuvent être mis en oeuvre tant contre les insectes isolés que contre des colonies des dits insectes, de même que lors d'infestations par les dits insectes.

Pour leur emploi au cours des procédés de traitement ou de protection selon l'invention, les composés insecticides (A) et (B) sont utilisés en des quantités qui peuvent varier dans de larges limites, notamment selon le type de culture et selon la virulence, la nature et le degré de l'attaque par les insectes, de même que selon les conditions climatiques ou édaphiques.

De manière avantageuse, au cours des procédés de traitement ou de protection selon l'invention, le composé insecticide (A), de préférence le fipronil, est utilisé en une quantité allant de 0,5 à 500g/ha, de préférence allant de 2 à 100g/ha ; quant à lui, le composé insecticide (B), de préférence l'un des composés choisis parmi la bifenthrin, la cyfluthrin, la cyhalothrin, la cypermethrin, l'alpha-cypermethrin, la beta-cypermethrin, la theta-cypermethrin, la zeta-cypermethrin, la deltamethrin, la fenpropathrin, le fenvalerate, la flumethrin, la permethrin, la phenothrin, la tefluthrin, la tralomethrin, le flucythrinate, le tau-fluvnlinate, est utilisé en une quantité allant de 0,5 à 1 000g/ha, de préférence allant de 1 à 500g/ha.

De manière encore plus avantageuse, au cours des procédés de traitement ou de protection selon l'invention, les composés insecticides (A) et (B) sont simultanément utilisés en des quantités respectivement comprises entre 2 à 100g/ha pour le composé insecticide (A) et entre 1 à 500g/ha pour le composé insecticide (B).

Le ratio pondéral A/B est généralement compris entre 0,0005 et 250, de préférence entre 0,05 et 10 ; le ratio pondéral B/A est, quant à lui, généralement compris entre 0,004 et 2 000, de préférence entre 0,1 et 20.

*C*omme cela vient d'être précisé, le ratio A/B est un ratio pondéral des quantités de composés insecticides (A) et (B) mises en oeuvre.

Le cas échéant et de manière toute préférée, au cours des procédés selon l'invention, le rapport entre les quantités de fipronil et de deltamethrin mises en oeuvre est compris entre 0,1 et 5, de préférence entre 0,5 et 3 ; de même le rapport entre les quantités de fipronil et de cypermethrin est compris entre 0,05 et 10, de préférence entre 0,15 et 6.

Pour ce qui concerne les quantités de composés insecticides (A) et (B) mises en oeuvre lors de procédés de traitement ou de protection selon l'invention par application foliaire, des résultats particulièrement satisfaisants sont obtenus pour des applications après dilution, notamment dans l'eau, comprises entre 50 et 1 5001/ha, de préférence comprises entre 200 et 8001/ha.

Pour leur utilisation au cours des procédés de traitement ou de protection selon la présente invention, les composés insecticides (A) et (B) peuvent faire l'objet d'une application simultanée mais peuvent également faire l'objet d'une préparation extemporanée au moment de la mise en oeuvre des dits procédés selon l'invention.

Selon un autre mode de mise en oeuvre des dits procédés selon l'invention, les composés insecticides (A) et (B) peuvent également être appliqués séparément.

Un autre aspect de la présente invention concerne des compositions insecticides susceptibles d'être mises en oeuvre au cours des procédés selon l'invention qui ont fait l'objet des précédents développements.

Les compositions selon l'invention comprennent comme seuls composés insecticides du fipronil ou 5-amino-3-cyano-1-(2,6-dichloro-4-trifluorométhylphényl)-4-trifluorométhyl-sulfinyl-pyrazole comme composé insecticide (A) et de l'alpha-cypermethrin ou mélange racémique comprenant du (S)-α-cyano-3-phenoxybenzyl (1R,3R)-3-(2,2-dichlorovinyl)-2,2-dimethylcyclopropanecarboxylate et du (R)-α-cyano-3-phenoxybenzyl (1S,3S)-3-(2,2-dichlorovinyl)-2,2-dimethylcyclopropanecar-boxylate ;
comme composé insecticide (B).

De manière habituelle, les composés insecticides (A) et (B) mis en oeuvre dans les compositions selon l'invention sont associés à un ou plusieurs supports et/ou à une ou plusieurs substances utiles à leur mise en formulation. Ainsi, le cas échéant, les compositions selon l'invention peuvent comprendre jusqu'à 99% de support et/ou jusqu'à 25% d'un ou plusieurs agents tensio-actifs et/ou jusqu'à 25% d'un ou plusieurs agents de formulation.

Également de manière habituelle, les compositions selon l'invention comprennent entre 0,00001 et 100%, de préférence entre 0,001 et 80%, de composés insecticides (A) et (B), que ces composés soient associés, ou qu'ils soient sous la forme de deux matières actives utilisées séparément.

Lorsqu'elles mettent en oeuvre deux matières actives (A) et (B) ensemble, les dites compositions selon l'invention peuvent le faire en des quantités telles que décrites précédemment, mais également pour des ratios A/B compris entre 0,0005 et 250, de préférence compris entre 0,05 et 10.

Pour leur emploi dans les compositions selon l' invention, les composés (*A*) et (B) sont habituellement associés à un ou plusieurs supports, éventuellement à un ou plusieurs agents tensio-actifs et éventuellement à un ou plusieurs agents ou auxiliaires de formulation.

Dans le présent exposé, par le terme support, on désigne une matière organique ou minérale, naturelle ou synthétique, avec laquelle la ou les matières actives (A) et/ou (B) sont dans les compositions selon l'invention, notamment pour faciliter leur application sur une plante, ou encore sur des graines ou sur le sol.

Ce support est donc généralement inerte et il doit, le plus souvent, être acceptable en agriculture, notamment par la plante traitée.

Le support éventuellement mis en oeuvre pour la mise en formulation des composés (A) et/ou (B) au sein des procédés selon l'invention peut être solide ou liquide.

Comme exemples de supports solides utilisables, on peut mentionner les silicates naturels ou synthétiques, les résines, les cires, les poudres fines ou les granules d'argile, notamment d'argile kaolinique, de terre de diatomées, de bentonite ou d'argile acide, l'oxyde de silicium hydraté synthétique, les talcs, les céramiques, d'autres minéraux dont la séricite, le quartz, le soufre, le charbon actif, le carbonate de calcium, la silice hydratée, ou encore les engrais industriels comme le sulfate d'ammonium, le phosphate d'ammonium, le nitrate d'ammonium, l'urée ou le chlorure d'ammonium.

Comme exemples de supports liquides utilisables, on peut mentionner l'eau, les alcools et notamment le méthanol ou l'éthanol, les cétones et notamment l'acétone, la méthyléthylcétone ou la cyclohéxanone, les fractions de pétrole, les hydrocarbures aromatiques dont le benzène, le toluène, le xylène, l'éthylbenzène ou le méthylnaphtalène, les hydrocarbures non aromatiques dont l'hexane, le cyclohexane, le kérosène ou le gazole, le gaz liquéfié, les esters dont l'acétate d'éthyle et l'acétate de butyle, les nitriles dont l'acétonitrile et l'isobutyronitrile, les éthers dont l'éther düsopropylique ou le dioxanne, les amides dont le N,N-diméthylformamide ou le N,N-diméthylacétamide, les hydrocarbures halogénées dont le dichlorométhane, le trichloroéthane ou le tétrachlorure de carbone, le diméthylsulfoxyde, les huiles végétales dont l'huile de soja ou l'huile de coton.

Le ou les agents tensioactifs peuvent être des agents émulsionnants, dispersants ou mouillants de type ionique ou non ionique

On peut, par exemple, citer des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués, notamment des alkylphénols ou des arylphénols, des sels d'esters d'acides sulfosucciniques, des dérivés de la taurine, notamment des alkyltaurates, des esters phosphoriques d'alcools ou de phénols polyoxyéthylés ; on peut tout particulièrement citer les sels d'alkylsulfonates, les alkylarylsulfonates, les éthers alkylaryliques, leurs dérivés polyoxyéthyléniques, les polyéthylèneglycoléthers, les esters de polyalcools, les dérivés de sucres, alcools et autres.

La présence d'au moins un agent tensioactif est généralement indispensable lorsque au moins une des matières actives et/ou le support inerte ne sont pas solubles, notamment dans l'eau, dans le cas où l'agent vecteur de l'application est l'eau.

Dans les compositions selon l'invention, peuvent également être associées aux composés (A) et/ou (B) toutes sortes d'autres ingrédients ou agents tels que, par exemple, des colloïdes protecteurs, des adhésifs, des agents épaississants, des agents thixotropes, des agents de pénétration, des agents stabilisants dont le phosphate acide d'isopropyle, le 2,6-di-tert-butyl-4-méthylphénol, le 2-tert-butyl-4-méthoxyphénol et le 3-tert-butyl-4-méthoxyphénol, des huiles végétales ou minérales, des acides gras ou leurs esters, des agents séquestrants, des agents dispersants dont la caséine, la gélatine, des saccharides et notamment la poudre d'amidon, la gomme arabique, certains dérivés de la cellulose ou l'acide alginique, des dérivés de la lignine, la bentonite, des polymères synthétiques solubles dans l'eau, notamment l'alcool polyvinylique, la polyvinylpyrrolidone, les acides polyacryliques, etc., ainsi que d'autres matières actives connues pour leurs propriétés fongicides ; ou pour leurs propriétés favorisant la croissance des plantes, notamment des engrais; ou pour leurs propriétés régulatrices de la croissance des plantes ou des insectes.

Les compositions insecticides selon l'invention peuvent prendre des formes assez diverses, notamment être sous formes solides ou liquides.

Ainsi, les dites compositions selon l'invention peuvent prendre la forme d'assez nombreuses formulations parmi

lesquelles on peut citer les solutions huileuses, les concentrés émulsionnables, les poudres mouillables, les formulations fluides et notamment les suspensions aqueuses ou les émulsions aqueuses, les granulés, les poudres, les aérosols, les formulations fumigènes dont les formulations fumigènes auto combustibles ou les formulations fumigènes à réaction chimique, les formulations pour nébulisation notamment les formulations pour brumisation, les formulations à très bas volume, les pâtes, les émulsions, les suspensions concentrées, de même que d'éventuels mélanges, associations ou combinaisons de ces différentes formes.

Le plus souvent, pour les formulations de type poudres pour poudrage ou dispersion, la teneur en composés insecticides (*A*) et (B) peut aller jusqu'à 100% ; de même, pour les formulations sous forme de granulés, notamment ceux obtenus par extrusion, par compactage, par imprégnation d'un support granulé, par granulation à partir d'une poudre, la teneur en composés insecticides (A) et (B) dans ces granulés selon l'invention est le plus souvent comprise entre 0,5 et 80%.

Les compositions insecticides selon l'invention, dites compositions concentrées, comprenant le composé insecticide (A) et le composé insecticide (B) qui sont sous forme de concentrés émulsionnables ou solubles comprennent le plus souvent de 25 à 100% de matières actives ; les émulsions ou solutions prêtes à l'application contenant, quant à elles, de 0,00001 à 20% de matières actives.

Il va sans dire que l'expression matières actives doit s'entendre tout au long du présent exposé comme, le cas échéant, une matière active ou composé insecticide (A) ou (B) seul, mais également comme une association de ces deux matières actives.

En plus du solvant, les concentrés émulsionnables peuvent contenir, lorsque c'est nécessaire, 2 à 20% d'additifs appropriés tels les agents stabilisants, les agents tensioactifs, les agents de pénétration, les inhibiteurs de corrosion, les colorants ou les adhésifs précédemment cités.

Les compositions insecticides selon l'invention sous forme de suspensions concentrées, également applicables en pulvérisation, sont préparées de manière à obtenir un produit fluide, stable, ne se déposant pas ; elles contiennent habituellement de 2 à 75% de matières actives, de 0,5 à 15% d'agents tensioactifs, de 0,1 à 10% d'agents thixotropes, de 0 à 10% d'additifs appropriés, comme des agents anti-mousse, des agents inhibiteurs de corrosion, des agents stabilisants, des agents de pénétration et des adhésifs; et, comme support, de l'eau ou un liquide organique dans lequel la, ou les, matières actives sont peu ou pas solubles, ou encore des mélanges de plusieurs de ces solvants, organiques ou non.

Certaines matières organiques solides ou des sels minéraux peuvent être dissous dans le support pour freiner ou interdire la sédimentation ; ou bien encore de telles matières peuvent être employées comme agents antigels pour l'eau.

Les compositions insecticides selon l'invention qui prennent la forme de poudres mouillables ou à pulvériser sont habituellement préparées de sorte qu'elles contiennent de 20 à 95% de matières actives.

Par ailleurs, elles contiennent habituellement, outre un support solide, de 0 à 5% d'un agent mouillant, de 3 à 10% d'un agent dispersant, et, le cas échéant, de 0 à 10% d'un ou plusieurs agents stabilisants et/ou autres additifs, comme des agents de pénétration, des adhésifs, ou des agents anti-mottants, colorants, etc.

Pour obtenir ces poudres à pulvériser ou poudres mouillables, sont intimement mélangées la ou les matières actives dans des mélangeurs appropriés avec les substances additionnelles, et on les broie avec des moulins ou autres broyeurs appropriés. On obtient alors des poudres à pulvériser dont la mouillabilité et la mise en suspension sont particulièrement avantageuses : on peut les mettre en suspension avec de l'eau à toute concentration désirée.

Plutôt que des poudres mouillables, on peut réaliser des compositions insecticides selon l'invention qui soient sous forme de pâtes.

Les conditions et modalités de réalisation et d'utilisation de ces pâtes sont similaires à celles des poudres mouillables ou à pulvériser.

Comme cela a déjà été dit, les dispersions et émulsions aqueuses, par exemple les compositions insecticides obtenues en diluant à l'aide d'eau une poudre mouillable ou un concentré émulsionnable selon l'invention, sont comprises dans le cadre général de la présente invention.

Les émulsions peuvent être du type eau-dans-l'huile ou huile-dans-l'eau et elles peuvent avoir une consistance épaisse ou assez épaisse.

De manière plus générale, les compositions selon l'invention peuvent prendre de nombreuses formes de formulations ; ainsi on peut employer ces compositions comprenant le composé insecticide (A) et le composé insecticide (B) en générateur d'aérosol ; appât (prêt à l'emploi) ; concentré pour préparation d'appâts ; appât en stock ; suspension de capsules ; produit pour nébulisation a froid ; poudre pour poudrage ; concentré émulsionnable ; émulsion de type aqueux/aqueuse ; émulsion de type huileux/inverse ; granulé encapsulé ; granulé fin ; suspension concentrée pour traitement de semences ; gaz comprimé ; produit générateur de gaz ; appât sur grain ; appât granulé ; granulé ; produit pour nébulisation a chaud ; macrogranulé ; microgranulé ; poudre à disperser dans l'huile ; suspension concentrée diluable dans l'huile ; liquide miscible dans l'huile ; pâte ; bâtonnet à usage agropharmaceutique ; appât en plaquette ; poudre pour traitement de semences à sec ; appât sur brisures ; semences traitées ou enrobées ; bougie fumigène ;

cartouche fumigène ; fumigène ; granulé fumigène ; bâtonnet fumigène ; comprimé fumigène ; boite fumigène ; concentré soluble ; poudre soluble ; liquide pour traitement de semences ; suspension concentrée (= concentré fluidifiable) ; poudre de piste ; liquide pour application à très bas volume ; suspension pour application à très bas volume ; produit diffuseur de vapeur : granulés ou comprimés à disperser dans l'eau ; poudre mouillable pour traitement humide ; granulés ou comprimés solubles dans l'eau ; poudre soluble pour traitement de semences ; poudre mouillable.

Selon un autre mode de réalisation de la présente invention, les différentes compositions insecticides selon l'invention qui ont pu être décrites jusque là, peuvent également prendre la forme de mélanges extemporanés communément qualifiés de tank-mix.

Ces compositions insecticides sous forme de tank-mix sont habituellement sous forme de compositions insecticides diluées.

Dans ce cas les compositions insecticides selon l'invention se présentent sous la forme de compositions insecticides comprenant séparément les composés insecticides (A) et (B), les dites compositions insecticides devant donc être mélangées au moment de leur application ou au moment de la préparation de la composition insecticide diluée à appliquer.

Le plus souvent, ces compositions insecticides dites tank-mix sont mélangées dans le réservoir du dispositif d'application.

Néanmoins, ces dites compositions insecticides comprenant séparément les composés insecticides (A) et (B) peuvent également être appliquées séparément, notamment après dilution, permettant ainsi d'apporter directement sur le lieux d'application les propriétés des compositions insecticides selon l'invention comprenant les dits composés insecticides (A) et (B).

Les exemples qui suivent vont permettre une meilleure illustration des différents aspects de le présente invention, notamment des aspects relatifs aux procédés et aux compositions selon l'invention mettant en oeuvre les dites compositions insecticides.

Les exemples de procédé A à L qui suivent vont apporter une illustration de procédés selon l'invention particuliers.

Ces exemples de procédé vont également permettre de faire ressortir de nombreux avantages propres aux procédés selon l'invention.

Exemple de procédé A

Cet exemple de procédé se propose de donner une illustration d'un procédé de traitement insecticide selon l'invention.

Le procédé de traitement mis en oeuvre a été un procédé de traitement contre la pyrale jaune à deux points ou *Tryporyza incertulas* lors de l'infestation d'une culture de riz.

Pour la comparaison du procédé selon l'invention avec des procédés de traitement insecticide connus, quatre parcelles ont été préparées de manière similaire.

La première est laissée sans traitement, la deuxième est traitée au moyen de fipronil comme matière active, la troisième au moyen de deltamethrin et la quatrième au moyen de fipronil et de deltamethrin conformément au procédé selon l'invention.

Après avoir été semés puis avoir levés, les semis de riz sont transplantés au stade de trois à quatre feuilles.

Les différentes matières actives ont ensuite été appliquées 7 jours après repiquage.

La formulation employée au cours de ce procédé selon l'invention est identique à celle de l'exemple de composition A.

Les taux d'application et les résultats obtenus sont rassemblés dans le tableau 1.

La mesure a été réalisée par décompte du taux de coeurs de plants de riz morts du fait de l'attaque du ravageur traité, à savoir *Tryporyza incertulas ;* ainsi, le taux le plus bas est obtenu après mise en oeuvre du procédé selon l'invention, tandis que les parcelles non traitées ou traitées de manière connue donnent des taux substantiellement plus élevés.

Ces résultats montrent donc que le procédé selon l'invention présente une efficacité insecticide supérieure tout en permettant une réduction substantielle des quantités de matières actives épandues et concomitamment une réduction de l'impact sur l'environnement.

Tableau 1

| | Parcelle n°1 | Parcelle n°2 | Parcelle n°3 | Parcelle n°4 |
|---|---|---|---|---|
| Matière active employée lors du procédé mis en oeuvre | Sans traitement | fipronil | deltamethrin | fipronil et deltamethrin |

(suite)

| | Parcelle n°1 | Parcelle n°2 | Parcelle n°3 | Parcelle n°4 |
|---|---|---|---|---|
| Taux d'application de matière active au cours du procédé | / | 10g/ha | 6g/ha | 11g/ha dont 5g/ha de fipronil et 6g/ha de deltamethrin |
| Taux de coeurs de plant morts relevé | 78% | 56% | 66% | 54% |

Cet exemple de procédé permet donc une parfaite illustration des avantages découlant de la mise en oeuvre du procédé selon l'invention, notamment du fait de la très satisfaisante efficacité insecticide contre le ravageur traité mais également du fait de la réduction des quantités de matières actives épandues.

Exemple de procédé B

Cet exemple de procédé donne une illustration d'un procédé selon l'invention utile pour le traitement insecticide contre les cicadelles et notamment contre *Nephotettix apicalis*

Ce procédé selon l'invention a été mis en oeuvre pour le traitement d'une culture de riz.

Les conditions opératoires ont été reproduites et adaptées à partir de celles de l'exemple de procédé A.

Les matières actives employées ont été le fipronil et la deltamethrin dans une formulation sous forme de granulés selon l'exemple de composition A.

L'application de la ou des matières actives sur les parcelles a été réalisée 25 jours après repiquage.

Les taux de matières actives appliquées et les résultats obtenus 14 jours après application sont rassemblés dans le tableau 2.

Tableau 2

| | Parcelle n°1 | Parcelle n°2 | Parcelle n°3 |
|---|---|---|---|
| Matière active employée lors du procédé mis en oeuvre | fipronil | deltamethrin | fipronil et deltamethrin |
| Taux d'application de matière active au cours du procédé | 25g/ha | 6g/ha | 11g/ha dont 5g/ha de fipronil et 6g/ha de deltamethrin |
| Efficacité insecticide | 16% | 6% | 28% |

Les résultats obtenus lors de la mise en oeuvre de ce procédé selon l'invention sont donc particulièrement satisfaisants, tant en terme d'efficacité insecticide qu'en terme de réduction de la quantité de matière active épandue.

Exemple de procédé C

Cet exemple de procédé donne une illustration d'un procédé selon l'invention utile pour le traitement insecticide contre *Nilaparvata lugens.*

Les conditions opératoires et de mesure sont reproduites et adaptées à partir de l'exemple de procédé B.

Les taux d'application et les résultats sont rassemblés dans le tableau 3.

Tableau 3

| | Parcelle n°1 | Parcelle n°2 | Parcelle n°3 |
|---|---|---|---|
| Matière active employée lors du procédé mis en oeuvre | fipronil | cypermethrin | fipronil et cypermethrin |
| Taux d'application de matière active au cours du procédé | 10g/ha | 12,5g/ha | 17,5g/ha dont 5g/ha de fipronil et 12,5g/ha de cypermethrin |
| Efficacité insecticide | 78% | 21% | 76% |

Les résultats obtenus lors de la mise en oeuvre de ce procédé selon l'invention sont donc particulièrement satisfaisants, tant en terme d'efficacité insecticide qu'en terme de réduction des quantités de matières actives épandues.

Exemple de procédé D

Cet exemple de procédé selon l'invention donne une illustration de l'amélioration du rendement d'une culture de riz obtenue concomitamment à la lutte contre les insectes ravageurs de cette culture de riz.
Lors de cet exemple de procédé de traitement selon l' invention, on a évalué le rendement de la culture mais également l'amélioration de ce rendement obtenue au moyen de la mise en oeuvre du dit procédé selon l'invention employant simultanément du fipronil comme composé (A) et de la cypermethrin comme composé (B).
Les conditions opératoires et de mesure sont reproduites et adaptées à partir de l'exemple de procédé B.
Les taux d'application et les résultats sont rassemblés dans le tableau 4.

Tableau 4

| | Parcelle n°1 | Parcelle n°2 | Parcelle n°3 | Parcelle n°4 |
|---|---|---|---|---|
| Matière active employée lors du procédé mis en oeuvre | fipronil | cypermethrin | fipronil et cypermethrin | Aucun traitement |
| Taux d'application de matière active au cours du procédé | 10g/ha | 12,5g/ha | 17,5g/ha dont 5g/ha de fipronil et 12,5g/ha de cypermethrin | / |
| Rendement de la parcelle (kg/ha) | 2 276 | 1416 | 2 596 | 791 |
| Amélioration du rendement de la parcelle (%) | 188 | 79 | 228 | / |

Les résultats obtenus lors de la mise en oeuvre de ce procédé selon l' invention sont donc particulièrement satisfaisants, tant en terme de rendement absolu, qu'en terme de rendement relatif du fait de l'amélioration obtenue lors de la mise en oeuvre du procédé selon l'invention, de même qu'en terme de réduction des quantités de matières actives épandues.

Exemple de procédé E

*C*et exemple de procédé donne une illustration d'un procédé selon l'invention utile pour le traitement insecticide contre *Nilaparvata lugens*
Les conditions opératoires et de mesure sont reproduites et adaptées à partir de l'exemple de procédé B.
Les matières actives employées, leurs taux d'application et les résultats obtenus sont rassemblés dans le tableau 5.

Tableau 5

| | Parcelle n°1 | Parcelle n°2 | Parcelle n°3 |
|---|---|---|---|
| Matière active employée lors du procédé mis en oeuvre | fipronil | deltamethrin | fipronil et deltamethrin |
| Taux d'application de matière active au cours du procédé | 25g/ha | 6g/ha | 8g/ha dont 5g/ha de fipronil et 3g/ha de deltamethrin |
| Taux de variation du nombre d'insectes ravageurs 3 jours après application | +33% | +27% | -40% |
| Taux de variation du nombre d'insectes ravageurs 7 jours après application | +11% | 0% | -20% |

Les résultats obtenus lors de la mise en oeuvre de ce procédé selon l'invention sont donc particulièrement satisfaisants, tant en terme d'efficacité insecticide qu'en terme de réduction des quantités de matières actives épandues.
En effet, seul le procédé de traitement selon l'invention mettant en oeuvre fipronil et deltamethrin comme composés (A) et (B) permet d'aboutir à une réduction du nombre d'insectes ravageurs.

Exemple de procédé F

Cet exemple de procédé donne une illustration d'un procédé selon l'invention utile pour le traitement insecticide contre *Nilaparvata lugens*.

Les conditions opératoires et de mesure sont reproduites et adaptées à partir de l'exemple de procédé B.

Les matières actives employées, leurs taux d'application et les résultats obtenus sont rassemblés dans le tableau 6.

Tableau 6

| | Parcelle n°1 | Parcelle n°2 | Parcelle n°3 |
|---|---|---|---|
| Matière active employée lors du procédé mis en oeuvre | fipronil | cypermethrin | fipronil et cypermethrin |
| Taux d'application de matière active au cours du procédé | 25g/ha | 12.5g/ha | 17.5g/ha dont 5g/ha de fipronil et 12.5g/ha de cypermethrin |
| Taux de variation du nombre d'insectes ravageurs 3 jours après application | +33% | -27% | -41% |
| Taux de variation du nombre d'insectes ravageurs 7 jours après application | +11% | +13% | -47% |

Les résultats obtenus lors de la mise en oeuvre de ce procédé selon l'invention sont donc particulièrement satisfaisants, tant en terme d'efficacité insecticide qu'en terme de réduction des quantités de matières actives épandues.

En effet, seul le procédé de traitement selon l'invention mettant en oeuvre fipronil et cypermethrin comme composés (A) et (B) permet d'aboutir à une réduction du nombre d'insectes ravageurs.

Exemple de procédé G

Cet exemple de procédé donne une illustration d'un procédé selon l'invention utile pour le traitement insecticide contre *Nephotettix apicalis*.

Les conditions opératoires et de mesure sont reproduites et adaptées à partir de l'exemple de procédé B.

Les matières actives employées, leurs taux d'application et les résultats obtenus sont rassemblés dans le tableau 7.

Tableau 7

| | Parcelle n°1 | Parcelle n°2 | Parcelle n°3 | Parcelle n°4 |
|---|---|---|---|---|
| Matière active employée lors du procédé mis en oeuvre | fipronil 1 | deltamethrin | fipronil et deltamethrin | Sans traitement |
| Taux d'application de matière active au cours du procédé | 25g/ha | 6g/ha | 8g/ha dont 5g/ha de fipronil et 3g/ha de deltamethrin | / |
| Taux de variation du nombre d'insectes ravageurs 1 jour après application | +50% | -13% | -53% | +200% |
| Taux de variation du nombre d'insectes ravageurs 3 jours après application | +83% | +25% | -32% | +200% |
| Taux de variation du nombre d'insectes ravageurs 7 jours après application | +183% | +75% | +11% | +522% |

Les résultats obtenus lors de la mise en oeuvre de ce procédé selon l'invention sont donc particulièrement satisfaisants, tant en terme d'efficacité insecticide qu'en terme de réduction des quantités de matières actives épandues.

Exemple de procédé H

Cet exemple de procédé donne une illustration d'un procédé selon l'invention utile pour le traitement insecticide contre *Niloparvata lugens*

Les conditions opératoires et de mesure sont reproduites et adaptées à partir de l'exemple de procédé B.

Les matières actives employées, leurs taux d'application et les résultats obtenus sont rassemblés dans le tableau 8.

Tableau 8

| | Parcelle n°1 | Parcelle n°2 | Parcelle n°3 |
|---|---|---|---|
| Matière active employée lors du procédé mis en oeuvre | fipronil | fipronil et cypermethrin | Sans traitement |
| Taux d'application de matière active au cours du procédé | 25g/ha | 25g/ha dont 5g/ha de fipronil et 20g/ha de cypermethrin | / |
| Taux de variation du nombre d'insectes ravageurs 1 jour après application | -15% | -49% | +65% |
| Taux de variation du nombre d'insectes ravageurs 3 jours après application | -8% | -23% | +34% |
| Taux de variation du nombre d'insectes ravageurs 7 jours après application | -16% | -28% | +42% |
| Taux de variation du nombre d'insectes ravageurs 14 jours après application | +40% | +26% | +108% |

Les résultats obtenus lors de la mise en oeuvre de ce procédé selon l' invention sont donc particulièrement satisfaisants, tant en terme d'efficacité insecticide qu'en terme de réduction des quantités de matières actives épandues.

Exemple de procédé I

Cet exemple de procédé donne une illustration d'un procédé selon l'invention utile pour le traitement insecticide contre *Nilaparvata lugens*.

Les conditions opératoires et de mesure sont reproduites et adaptées à partir de l'exemple de procédé B.

Les matières actives employées, leurs taux d'application et les résultats obtenus sont rassemblés dans le tableau 9.

Tableau 9

| | Parcelle n°1 | Parcelle n°2 | Parcelle n°3 |
|---|---|---|---|
| Matière active employée lors du procédé mis en oeuvre | fipronil | fipronil et cypermethrin | Sans traitement |
| Taux d'application de matière active au cours du procédé | 25g/ha | 25g/ha dont 5g/ha de fipronil et 20g/ha de cypermethrin | / |
| Taux de variation du nombre d'insectes ravageurs 7 jours après application | +19% | -14% | +113% |

Les résultats obtenus lors de la mise en oeuvre de ce procédé selon l'invention sont donc particulièrement satisfaisants, tant en terme d'efficacité insecticide qu'en terme de réduction des quantités de matières actives épandues.

Exemple de procédé J

Cet exemple de procédé se propose de donner une illustration d'un procédé de traitement insecticide selon l'invention.

Le procédé de traitement mis en oeuvre a été un procédé de traitement contre la pyrale jaune à deux points ou *Tryporyza incertulas* lors de l'inf estation d'une culture de riz.

Les conditions opératoires et de mesure sont reproduites et adaptées à partir de l'exemple de procédé B.
Les matières actives employées, leurs taux d'application et les résultats obtenus sont rassemblés dans le tableau 10.

Tableau 10

| | Parcelle n°1 | Parcelle n°2 | Parcelle n°3 |
|---|---|---|---|
| Matière active employée lors du procédé mis en oeuvre | Sans traitement | fipronil | fipronil et cypermethrin |
| Taux d'application de matière active au cours du procédé | / | 25g/ha | 25g/ha dont 5g/ha de fipronil et 20g/ha de cypermethrin |
| Taux de variation du nombre de coeurs de plant morts | -26% | -35% | -66% |

La mesure a été réalisée par décompte du taux de coeurs de plants de riz morts du fait de l'attaque du ravageur traité, à savoir *Tryporyza incertulas;* ainsi, le taux de réduction le plus important est obtenu après mise en oeuvre du procédé selon l'invention, tandis que les parcelles non traitées ou traitées de manière connue donnent des taux substantiellement plus médiocres.
Ces résultats montrent donc que le procédé selon l'invention présente une efficacité insecticide supérieure tout en permettant une réduction substantielle des quantités de matières actives épandues et concomitamment une réduction de l' impact sur l'environnement.

Exemple de procédé K

Cet exemple de procédé se propose de donner une illustration d'un procédé de traitement insecticide selon l'invention.
Le procédé de traitement mis en oeuvre a été un procédé de traitement contre *Scotinophara lurida* lors de l'infestation d'une culture de riz.
Les conditions opératoires et de mesure sont reproduites et adaptées à partir de l'exemple de procédé B.
Les matières actives employées, leurs taux d'application et les résultats obtenus sont rassemblés dans le tableau 11.

Tableau 11

| | Parcelle n°1 | Parcelle n°2 | Parcelle n°3 |
|---|---|---|---|
| Matière active employée lors du procédé mis en oeuvre | Sans traitement | fipronil | fipronil et cypermethrin |
| Taux d'application de matière active au cours du procédé | / | 25g/ha | 25g/ha dont 5g/ha de fipronil et 20g/ha de cypermethrin |
| Taux de variation du nombre d'insectes mesuré 1 jour après traitement | -21% | -43% | -52% |
| Taux de variation du nombre d'insectes mesuré 3 jours après traitement | -40% | -67% | -81% |
| Taux de variation du nombre d'insectes mesuré 14 jours après traitement | -27% | -45% | -60% |

Ces résultats montrent donc que le procédé selon l'invention présente une efficacité insecticide supérieure tout en permettant une réduction substantielle des quantités de matières actives épandues et concomitamment une réduction de l'impact sur l'environnement.

Exemple de procédé L

Des semences de maïs (variété Lorenzo), dans un bac, ont été traitées sous agitation avec les matières actives, seules et combinées.

Trois semences traitées ont été semées dans un pôt de 10cm de diamètre.

Une semaine après avoir été semé, chaque pot a été infecté au moyen de 10 larves de *Agrotis segetum* (noctuelle des moissons) au stade L2.

L'efficacité des matières actives contre les dommages des larves a été mesurée 42 jours après semis.

Le procédé selon l' invention a été conduit dans une serre, à une température de 22-27°C et à un taux d'humidité relatif de 30-70%.

Pour évaluer la synergie entre les matières actives, les résultats ont été traités selon la méthode décrite par S.R. Colby dans "Calculating Synergistic and Antagonistic Responses of Herbicide Combinations" in Weeds 1967 15, 20-22.

Par cette méthode le taux de contrôle théorique (E) contre les dommages comparé à la référence laissée sans traitement est donné par l'équation suivante

$$E = D + F - DF/100$$

dans laquelle D est le pourcentage de contrôle par la deltamethrin seule à une concentration donnée et F est le pourcentage de contrôle par le fipronil seul à une concentration donnée.

Si le résultat observé pour le mélange est supérieur à E, la synergie est confirmée.

Les résultas sont rassemblés dans le tableau suivant (moyenne de trois traitements).

Tableau 12

| Matière active | Taux d'application | Efficacité | Théorique (E) |
|---|---|---|---|
| (formulation) | g de matière active/kg de semences | (%) | (%) |
| sans traitement | - | 0 | |
| fipronil (FS 500 g/l) | 2,5 | 50 | |
| deltamethrin (SC 50 g/l) | 0,5 | 40 | |
| fipronil (FS 500 g/l) + deltamethrin (SC 50 g/l) | 2,5 + 0,5 | 90 | 70 |

De manière particulièrement satisfaisante, les résultats obtenus au cours des différents procédés selon l'invention mis en oeuvre au cours des exemples de procédés A à L n'ont nécessité qu'une application unique des matières actives (A) et (B) utilisées alors que dans la pratique habituelle connue, il est courant d'avoir recours à plusieurs applications pour parvenir à un résultat acceptable ou équivalent.

Les exemples de composition A à G illustrent des compositions insecticides.

Exemple de composition A

Selon un exemple de composition sous forme de granulés, on utilise les constituants suivants :

| | |
|---|---|
| - 22,7g de fipronil comme composé insecticide (A) et 27.3g de deltamethrin comme composé insecticide (B) | 50g |
| - épichlorhydrine | 2.5g |
| - éther de cétyle et de polyglycol | 2,5g |
| - polyéthylène glycol | 35g |
| - kaolin de granulométrie comprise entre 0,3 et 0,8mm | 910g |

Dans ce cas particulier on mélange les matières actives insecticides avec l'épichlorhydrine et on ajoute 60g d'acétone, puis on ajoute alors le polyéthylène glycol et l'éther de cétyle et de polyglycol. On arrose le kaolin avec la solution obtenue et on évapore ensuite l'acétone sous vide.

Exemple de composition B

Selon un exemple de composition sous forme de granulés, on utilise les constituants suivants :

| | |
|---|---|
| - 14,3g de fipronil comme composé insecticide (A) et 35,7g de cypermethrin comme composé insecticide (B) | 50g |
| - épichlorhydrine | 2,5g |
| - éther de cétyle et de polyglycol | 2,5g |
| - polyéthylène glycol | 35g |
| - kaolin de granulométrie comprise entre 0,3 et 0,8mm | 910g |

*O*n opère ensuite comme décrit pour l'exemple de composition A.

Exemple de composition C

Cet exemple se propose d'illustrer une composition qui soit sous la forme d'un concentré émulsionnable.

| | |
|---|---|
| - 7,2g de fipronil comme composé insecticide (A) et de 17,8g de cypermethrin comme composé insecticide (B) | 25g |
| - condensat de tristyrylphénol/oxyde d'éthylène | 10g |
| - solution à 70% poids/volume de dodécylbenzènesulfonate de calcium | 5g |
| - N-méthyl-pyrrolidone | 50g |
| - solvant aromatique léger en $C_{10}$ | 10g |

Les trois premiers composants sont dissous dans la N-méthyl-pyrrolidone ; le solvant aromatique léger en $C_{10}$ est ensuite ajouté pour ajuster au volume final.

Exemple de composition D

Une autre composition insecticide particulière, qui est sous forme d'un concentré émulsionnable, est réalisée en employant les composants suivants :

| | |
|---|---|
| - 15,6g de fipronil comme composé insecticide (A) et de 9,4g de deltamethrin comme composé insecticide (B) | 25g |
| - condensat de tristyrylphénol/oxyde d'éthylène | 10g |
| - solution à 70% poids/volume de dodécylbenzènesulfonate de calcium | 5g |
| - N-méthyl-pyrrolidone | 50g |
| - solvant aromatique léger en $C_{10}$ | 10g |

On opère ensuite comme décrit pour l'exemple de composition C.

Exemple de composition E

Selon un exemple de composition sous forme de granulés, on utilise les constituants suivants :

| | |
|---|---|
| - 10g de fipronil comme composé insecticide (*A*) et 40g de cypermethrin comme composé insecticide (B) | 50g |
| - épichlorhydrine | 2,5g |
| - éther de cétyle et de polyglycol | 2,5g |
| - polyéthylène glycol | 35g |
| - kaolin de granulométrie comprise entre 0,3 et 0,8mm | 910g |

*O*n opère ensuite comme décrit pour l'exemple de composition A.

Exemple de composition F

Selon un autre exemple de composition sous forme de granulés dispersables dans l'eau, on utilise les constituants suivants :

| | |
|---|---|
| - 81,9g de fipronil comme composé insecticide (A) et de 98.1g de deltamethrin comme composé insecticide (B) | 180g |
| - lignosulphonate de sodium | 27g |
| - condensat d'alkylnaphtnlènesulfonates | 18g |
| - alkylnaphtalènesulfonates | 4,5g |

Les ingrédients sont mélangés, micronisés dans un broyeur à énergie fluide puis granulés dans un granulateur rotatif par pulvérisation d'eau (jusqu'à 10%). Les granulés ainsi obtenus sont séchés dans un sécheur à lit fluidisé afin d'éliminer l'excès d'eau.

Exemple de composition *G*

Selon un autre exemple de composition sous forme de granulés dispersables dans l'eau, on utilise les constituants suivants :

| | |
|---|---|
| - 36g de fipronil comme composé insecticide (*A*) et 144g de cypermethrin comme composé insecticide (B) | 180g |
| - lignosulphonate de sodium | 27g |
| - condensat d'alkylnophtalènesulfonates | 18g |
| - alkylnaphtalènesulfonates | 4,5g |

On opère ensuite comme décrit pour l'exemple de composition F.

Les exemples de procédé A à L, qui viennent d'être donnés illustrent bien la supériorité des procédés selon l'invention par rapport aux insecticides (A) et (B) connus seuls.

L'ensemble des dits exemples de procédé permet également une parfaite illustration des avantages que les procédés de traitement selon l'invention, au moyen de compositions comprenant un composé insecticide (A) et un composé insecticide (B), apportent.

Par ailleurs aucun phénomène de phytotoxicité n'est observé dans ces exemples de procédé lors des traitements au moyen des différentes compositions insecticides selon l'invention.

## Revendications

1. Procédé de traitement et de lutte contre les arthropodes ravageurs des cultures **caractérisé en ce qu'**il met en oeuvre pour le traitement et/ou la protection des cultures céréalières ou maraîchères, de même que pour le traitement ou la protection du maïs, du sorgho, du tournesol, du soja, ou encore du coton, du pois, du colza, de pommes de terre, des cultures légumières, des betteraves, des oignons, des choux, des tomates, des haricots, des salades, encore **caractérisé en ce qu'**il met en oeuvre un composé insecticide (A) de formule (I)

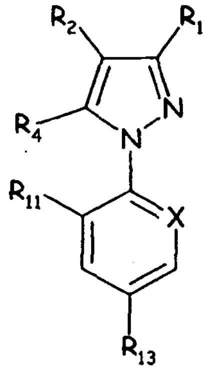

(I)

dans laquelle :

$R_1$ représente -CN ou le radical méthyle ou le radical -*C*(*S*)$NH_2$ ou le radical -*C*(=N-Y)Z;
$R_2$ représente -*S*(*O*)$_n R_3$;
$R_3$ représente un radical alkyle ou haloalkyle;
$R_4$ est choisi parmi le groupe comprenant l'atome d'hydrogène, un atome d'halogène, et un radical qui peut être -$NR_5R_6$, -*C*(*O*)$OR_7$, -*S*(*O*)$_m R_7$, alkyle, haloalkyle, -*O*$R_8$, ou -N=*C*($R_9$)($R_{10}$):
$R_5$ et $R_6$ sont indépendamment choisis parmi l'atome d'hydrogène, un radical alkyle, haloalkyle, -*C*(*O*)alkyle, -*C*(*O*)$OR_7$, -S(*O*)$_r$*C*$F_3$ ; ou $R_5$ et $R_6$ forment ensemble un radical divalent qui peut être interrompu par un ou plusieurs hétéroatomes ;
$R_7$ est choisi parmi un radical alkyle et un radical haloalkyle ;
$R_8$ est choisi parmi un radical alkyle, un radical haloalkyle et l'atome d'hydrogène ;
$R_9$ est choisi parmi l'atome d'hydrogène et un radical alkyle ;
$R_{10}$ est choisi entre un radical phényle et hétéroaryle éventuellement substitué par un ou plusieurs radicaux hydroxy, atomes d'halogènes, -O-alkyles, -S-alkyles, cyano ou alkyle ou une combinaison de ceux-ci ;
X est choisi parmi l'atome d'azote et le radical *C*-$R_{12}$ ;
Y est choisi parmi les groupements hydroxy, amino, amino-carbonyles, alkoxy, aryl-carbonyles, alkyl-carbonyles, alkoxy-carbonyles, carbamoyles, aryl-carbamoyles, alkyl-carbamoyles, pyrazoles substitués ou non;
Z est choisi parmi les groupements hydroxy, amino, amino-carbonyles, alkoxy, aryl-carbonyles, alkyl-carbonyles, alkoxy-carbonyles, carbamoyles, aryl-carbamoyles, alkyl-carbamoyles ;
$R_{11}$ et $R_{12}$ sont indépendamment choisis parmi un atome d'halogènes ou l'atome d'hydrogène;
$R_{13}$ est choisi parmi un atome d'halogènes, un radical haloalkyle, haloalkoxy, -S(O)$_q$$CF_3$, et -$SF_5$ ;
m, n, q, r sont indépendamment choisis parmi 0, 1 et 2 ;
avec la restriction que lorsque $R_1$ représente le radical méthyle alors $R_3$ représente un radical haloalkyle, $R_4$ représente -$NH_2$, $R_{11}$ représente Cl, $R_{13}$ représente -$CF_3$, et X représente N ;
les radicaux alkyle et alkoxy de la formule (I) sont de préférence des radicaux alkyle et alkoxy inférieurs, c'est à dire, des radicaux possédant de un à quatre atomes de carbone ;
les radicaux haloalkyle et haloalkoxy possèdent de même de préférence de un à quatre atomes de carbone ;
les radicaux haloalkyle et haloalkoxy peuvent porter un ou plusieurs atomes d'halogènes ; les radicaux préférés de ce type comprennent -$CF_3$ et -$OCF_3$ ; et un composé insecticide (B) de la famille des pyréthrinoïdes.

2. Procédé selon la revendication 1 **caractérisé en ce que** le composé insecticide (A) est de formule (I) dans laquelle:

$R_1$ représente -CN ; et/ou
$R_4$ représente -$NR_5R_6$ ; et/ou
$R_5$ et $R_6$ sont indépendamment choisis parmi l'atome d'hydrogène, un radical alkyle, haloalkyle et -C(O)alkyle ; et/ou
X représente -C-$R_{12}$ ; et/ou
$R_{13}$ est choisi parmi un atome d'halogène, un radical haloalkyle, haloalcoxy, et -$SF_5$.

3. Procédé selon l'une ou l'autre des revendications 1 et 2 **caractérisé en ce que** le composé insecticide (A) est le fipronil ou 5-amino-3-cyano-1-(2,6-dichloro-4-trifluorométhylphényl)-4-trifluorométhyl-sulfinyl-pyrazole.

**4.** Procédé selon l'une ou l'autre des revendications 1 à 3 **caractérisé en ce que** le composé insecticide (B) est de formule (II)

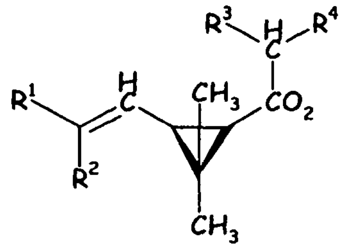

(II)

dans laquelle :

$R_1$ et $R_2$ représentent, indépendamment, un radical alkyle de $C_1$ à $C_8$ ou un radical halogénoalkyle de $C_1$ à $C_8$ ou un atome d'halogène ou un groupement phényle, substitué ou non ; et/ou
$R_3$ représente un groupement -CN ou un atome d'hydrogène ou un radical alkyle de $C_1$ à $C_8$ ; et/ou
$R_4$ représente un groupement phényle, substitué ou non.

**5.** Procédé selon l'une ou l'autre des revendications 1 à 4 **caractérisé en ce que** le composé insecticide (B) est de formule (II) dans laquelle

$R_1$ et $R_2$ représentent, indépendamment, un atome de brome ou un atome de chlore ou un radical méthyle ou un radical iso-propyle ou un radical para-chloro-phényle ou un radical trifluorométhyle : et/ou
$R_4$ représente un groupement phénoxybenzyle, substitué ou non.

**6.** Procédé selon l'une ou l'autre des revendications 1 à 5 **caractérisé en ce que** le composé insecticide (B) est de formule (II) dans laquelle $R_4$ représente un groupement halogénophénoxybenzyle.

**7.** Procédé selon l'une ou l'autre des revendications 1 à 6 **caractérisé en ce que** le composé insecticide (B) est sous la forme d'un isomère particulier ou sous la forme d'un mélange de plusieurs isomères ou sous la forme d'un mélange de plusieurs composés de formule (II).

**8.** Procédé selon l'une ou l'autre des revendications 1 à 3 ou 7 **caractérisé en ce que** le composé insecticide (B) est choisi dans le groupe comprenant

la bifenthrin ou 2-methytbiphenyl-3-ylmethyl-(Z)-(1RS.3RS)-3-(2-chloro-3,3,3-trifluoroprop-1-enyl)-2,2-dimethylcyclopropanecarboxylate;
la cyfluthrin ou (R,S)-α-cyano-4-fluoro-3-phenoxybenzyl (1RS,3RS;1RS,3SR)-3-(2,2-dichlorovinyl)-2,2-dimethylcyclopropanecarboxylate ;
la cyhalothrin ou (R,S)-α-cyano-3-phenoxybenzyl (Z)-(1RS,3RS)-(2-chloro-3,3,3-trifluoropropenyl)-2,2-dimethylcyclopropanecarboxylate ;
la cypermethrin ou (R,S)-α-cyono-3-phenoxybenzyl (1RS,3RS;1RS,3SR)-3-(2,2-dichlorovinyl)-2,2-dimethylcyclopropanecarboxylate ;
l'alpha-cypermethrin ou mélange racémique comprenant du (S)-α-cyano-3-phenoxybenzyl (1R,3R)-3-(2,2-dichlorovinyl)-2,2-dimethylcyclopropenecarboxylate et du (R)-α-cyano-3-phenoxybenzyl (1S,3S)-3-(2,2-dichlorovinyl)-2,2-dimethylcyctopropanecar-boxylate ;
la beta-cypermethrin ou mélange réactionnel comprenant, en un rapport 2 :3, les 2 couples énantiomériques (S)-α-cyono-3-phenoxybenzyl (1R)-cis-3-(2,2-dichlorovinyl)-2,2-dimethylcycloproponecorboxylate et (R)-α-cyano-3-phenoxybenryl (1S)-cis-3-(2,2-dichlorovinyl)-2,2-dimethylcyclopropanecarboxylate avec (S)-α-cyano-3-phenoxybenzyl (1R)-trans-3-(2,2-dichloroviriyl)-2,2-dimethylcyclopropanecnrboxylnte et (R)-α-cynno-3-phenoxybenzyl (15)-trnns-3-(2,2-dichlorovinyl)-2,2-dimethylcyclopropnnecarboxylate ;
la theta-cypermethrini ou mélange des énantiomères (R)-α-cyano-3-phenoxybenzyl (1S,3R)-3-(2,2-dichlorovinyl)-2,2-dimethylcyclopropanecarboxylate et (*S*)-α-cyano-3-phenoxybenzyl (1R,3S)-3-(2,2-dichlorovinyl)-2,2-dimethylcyclopropanecarboxylate en un rapport 1:1;
la zeta-cypermethrin ou mélange des stéréo-isomères (S)-α-cyano-3-phenoxybenzyl (1R5,3RS;1R5,3SR)-3-(2,2-dichlorovinyl)-2,2-dimethylcyclopropanecarbo-xylate, mélange dans lequel le rapport des couples énantiomériques (S)-(1RS,3RS) et (5)-(1RS,35R) est respectivement compris entre 45-55 et 55-45 ;
la deltamethrin ou (S)-α-cyano-3-phenoxybenzyl (1R,3R)-3-(2,2-dibromovinyl)-2,2-dimethylcyclopropanecarboxylate ;
la fenpropathrin ou (RS)-α-cynno-3-phenoxybenzyl 2,2,3,3-tetromethylcyclopropa-necarboxylate ;
le fenvalerate ou (RS)-α-cyano-3-phenoxybenzyl (RS)-2-(4-chlorophenyl)-3-methylbutyrate ;
la flumethrin ou α-cyano-4-fluoro-3-phenoxybenzyl 3-(β,4-dichlorostyryl)-2,2-dimethylcyclopropnnecarboxylate;
la permethrin ou 3-phenoxybenzyl (1RS,3RS;1RS,35R)-3-(2,2-dichlorovinyl)-2,2-dimethylcyclopropanecarboxylate ;
la phenothrin ou 3-phenoxybenzyl (1R5,3RS;1RS,3SR)-2,2-dimethyl-3-(2-methylprop-1-enyl)cyclopropanecarboxylate en un ratio A/B copris entre 0,25 et 2,5 ;
la tefluthrin ou 2,3,5,6-tetrafluoro-4-methylbenryl (Z)-(1RS,3RS)-3-(2-chloro-3,3,3-trifluoroprop-1-enyl)-2,2-dimethylcyclopropanecarboxylate ;
la tralomethrin ou (S)-α-cyono-3-phenoxybenzyl (1R,3S)-2,2-dimethyl-3-[(RS)-1,2,2,2-tetrabromoethyl]cyclopropanecarboxylate;
le flucythrinate ou (RS)-α-cycino-3-phenoxybenzyl (S)-2-(4-difluoromethoxyphenyl)-3-methylbutyrate ;
le tau-fluvalinate ou (RS)-a-cyano-3-phenoxybenzyl N-(2-chloro-α,α,α-trifluoro-p-tolyl)-D-valinate.

**9.** Procédé selon l'une ou l'autre des revendications 1 à 8 **caractérisé en ce qu'**il est mis en oeuvre pour le traitement et/ou la protection des cultures du riz, du blé, de l'orge ou du seigle.

**10.** Procédé selon l'une ou l'autre des revendications 1 à 9 **caractérisé en qu'**il est mis en oeuvre

pour le traitement et/ou la protection du matériel de propagation végétal ou des semences, notamment les graines, les tubercules ou les rhizomes ; et/ou
pour le traitement et/ou la protection des racines : et/ou
pour le traitement et/ou la protection des tiges ou des feuilles de la plante ; et/ou
pour le traitement et/ou la protection des racines, ou encore, des fruits ou autres parties de la plante possédant une substantielle valeur économique ou agronomique ; et/ou
pour le traitement et/ou la protection du sol cultivé ou destiné à être cultivé.

**11.** Procédé selon l'une ou l'autre des revendications 1 à 10 **caractérisé en ce qu'**il est mis en oeuvre pour le traitement et/ou la protection des plantes à de nombreux stades de leur développement, notamment pour le traitement des semences, des semis ou des semis de repiquage ou des plants de repiquage, ou encore des plants.

**12.** Procédé selon l'une ou l'autre des revendications 1 à 11 **caractérisé en ce qu'**il est mis en oeuvre pour la lutte ou le contrôle d'insectes nuisibles, notamment pour la lutte ou le contrôle des insectes des familles

*Delphacidae sp.,* notamment *Nilaparvata lugens Nilaparvata, oryzae* et *Sagatella furcifera ;* et/ou
*Cicadellidae sp.* notamment *Empoasca decipiens, Nephotettix apicalisi, Nephotettix impicticeps, Nephotettix cincticeps et Nilaparvata oryzae;* et/ou
*Pyralidae sp.,* notamment *Tryporyza incertulas, Tryporyza innotata, Cnaphalocrosis medinalis, Chilo loftini, Chilo suppressalis, Chilo indicus* et *Chilotraea plejadellus;*
*Tylenchidae sp.,* notamment *Ditylenchus dipsaci, Ditylenchus angustus* et *Ditylenchus radicicolus;* et/ou
*Noctuidae sp.,* notamment *Sesamia interens, Sesamia calamistis, Sesamia cretica* et *Spodoptera litura;* et/ou
*Pentatomidae sp.* notamment *Scotinophara lurida* et *Scotinophara coarctata ;* et/ou
*Plutellidae sp.* notamment *Ptutella xylostella;* et/ou
*Tortricidae sp.* notamment *Archips breviplicanus;* et/ou
*Cecidomyiidae sp.* notamment *Orselia oryzae* et *Pachydiplosis oryzae.*

**13.** Procédé selon l'une ou l'autre des revendications 1 à 12 **caractérisé en ce qu'**il est mis en oeuvre pour le contrôle ou la lutte contre les insectes du sol.

**14.** Procédé selon l'une ou l'autre des revendications 1 à 13 **caractérisé en ce qu'**il est mis en oeuvre pour le contrôle ou la lutte contre les insectes nuisibles aux différents stades de la vie ou du développement des insectes, notamment contre les oeufs, les larves quel qu'en soit le stade de développement, les chrysalides ou les nymphes, ou encore contre les arthropodes ou les insectes au stade adulte.

**15.** Procédé selon l'une ou l'autre des revendications 1 à 14 **caractérisé en ce qu'**il met en oeuvre de 0,5 à 500g/ha, de préférence de 2 à 100g/ha de composé insecticide (A) et/ou de 0,5 à 1 000g/ha, de préférence de 1 à 500g/ha de composé insecticide (B).; et/ou qu'il met en oeuvre les composés insecticides (A) et (B) en un ratio pondéral A/B compris entre 0,0005 et 250, de préférence entre 0,05 et 10 : et/ou qu'il met en oeuvre les composés insecticides (A) et (B) en un ratio pondéral B/A compris entre 0,004 et 2 000, de préférence entre 0,1 et 20.

**16.** Procédé selon l'une ou l'autre des revendications 1 à 15 **caractérisé en ce qu'**il met en oeuvre du fipronil comme composé (*A*) et de la deltamethrin ou de la cypermethrin comme composé (B), en des rapports *A*/B respectivement compris entre 0,1 et 5, de préférence entre 0,5 et 3, pour la deltamethrin et entre 0,05 et 10, de préférence entre 0,15 et 6, pour la cypermethrin.

**17.** Composition susceptible d'être mise en oeuvre dans un procédé selon l'une ou l'autre des revendications 1 à 16 **caractérisée en ce qu'**elle comprend du fipronil ou 5-amino-3-cyano-1-(2,6-dichloro-4-trifluorométhylphényl)-4-trifluorométhyl-sulfinyl-pyrazole comme composé insecticide (*A*) et de l'alpha-cypermethrin ou mélange racémique comprenant du (S)-α-cyano-3-phenoxybenzyl (1R,3R)-3-(2,2-dichlorovinyl)-2,2-dimethylcyclopropanecarboxylate et du (R)-α-cyano-3-phenoxybenzyl (1S,3S)-3-(2,2-dichlorovinyl)-2,2-dimethylcyclopropanecar-boxylate comme composé insecticide (B), et qu'elle comprend le composé insecticide (*A*) et le composé insecticide (B) comme seule composés insecticides.

**18.** Composition selon la revendication 17 **caractérisée en ce qu'**elle comprend entre 0,00001 et 100%, de préférence entre 0,001 et 80%, de composés insecticides (*A*) et (B),

**19.** Composition selon l'une ou l'autre des revendications 17 et 18 **caractérisée en ce qu'**elle comprend jusqu'à 99% d'un ou plusieurs supports et/ou jusqu'à 25% d'un ou plusieurs agents tensio-actifs et/ou jusqu'à 25% d'un ou plusieurs agents de formulation.

## Claims

**1.** A method for treating and combating arthropods that destroy crops, which uses for the treatment and/or protection of cereal or market garden crops, just as for the treatment or protection of maize, sorghum, sunflower or soybean, or else cotton, pea, rapeseed, potato, vegetable crops, beetroot, onions, cabbages, tomatoes, beans or lettuces, and also which uses an insecticidal compound (A) of formula (I)

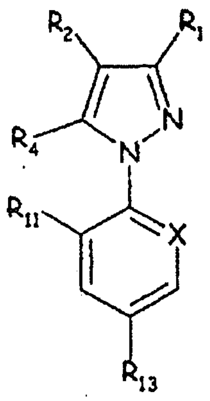

(I)

in which:

$R_1$ represents -CN, a methyl radical, the radical -C(S)$NH_2$ or the radical -C(=N-Y)Z;
$R_2$ represents -S(O)$_n$$R_3$;
$R_3$ represents an alkyl or haloalkyl radical;
$R_4$ is chosen from the group comprising the hydrogen atom, a halogen atom, and a radical which may be

$-NR_5R_6$, $-C(O)OR_7$, $-S(O)_mR_7$, alkyl, haloalkyl, $-OR_8$ or -N=C ($R_9$) ($R_{10}$);
$R_5$ and $R_6$ are independently chosen from the hydrogen atom, and an alkyl, haloalkyl, -C(O)alkyl, $-C(O)OR_7$ or $-S(O)_rCF_3$ radical, or $R_5$ and $R_6$ together form a divalent radical which may be interrupted with one or more heteroatoms;
$R_7$ is chosen from an alkyl radical and a haloalkyl radical;
$R_8$ is chosen from an alkyl radical, a haloalkyl radical and the hydrogen atom;
$R_9$ is chosen from the hydrogen atom and an alkyl radical;
$R_{10}$ is chosen from a phenyl radical and a heteroaryl radical, optionally substituted with one or more hydroxyl radicals, halogen atoms, -O-alkyl, -S-alkyl, cyano or alkyl radicals, or a combination thereof;
X is chosen from the nitrogen atom and the radical $C-R_{12}$ ;
Y is chosen from hydroxyl groups, amino groups, aminocarbonyl groups, alkoxy groups, arylcarbonyl groups, alkylcarbonyl groups, alkoxycarbonyl groups, carbamoyl groups, arylcarbamoyl groups, alkylcarbamoyl groups and pyrazole groups, which may or may not be substituted;
Z is chosen from hydroxyl groups, amino groups, aminocarbonyl groups, alkoxy groups, arylcarbonyl groups, alkylcarbonyl groups, alkoxycarbonyl groups, carbamoyl groups, arylcarbamoyl groups and alkylcarbamoyl groups;
$R_{11}$ and $R_{12}$ are independently chosen from a halogen atom or the hydrogen atom;
$R_{13}$ is chosen from a halogen atom, and a haloalkyl, haloalkoxy, $-S(O)_qCF_3$ and $-SF_5$ radical ;
m, n, q and r are independently chosen from 0, 1 and 2;
with the restriction that, when $R_1$ represents a methyl radical, then $R_3$ represents a haloalkyl radical, $R_4$ represents $-NH_2$, $R_{11}$ represents Cl, $R_{13}$ represents $-CF_3$ and X represents N;
the alkyl and alkoxy radicals of formula (I) are preferably lower alkyl and alkoxy radicals, i.e. radicals having from one to four carbon atoms;
the haloalkyl and haloalkoxy radicals similarly preferably have from one to four carbon atoms;
the haloalkyl and haloalkoxy radicals may bear one or more halogen atoms; the preferred radicals of this type include $-CF_3$ and $-OCF_3$;
and an insecticidal compound (B) of the pyrethrinoid family.

2. The method as claimed in claim 1, wherein the insecticidal compound (A) is of formula (I) in which:

$R_1$ represents -CN; and/or
$R_4$ represents $-NR_5R_6$; and/or
$R_5$ and $R_6$ are independently chosen from the hydrogen atom, and an alkyl, haloalkyl and -C(O)-alkyl radical; and/or
X represents $-C-R_{12}$; and/or
$R_{13}$ is chosen from a halogen atom, and a haloalkyl, haloalkoxy and $-SF_5$ radical.

3. The method as claimed in either of claims 1 and 2, wherein the insecticidal compound (A) is fipronil or 5-amino-3-cyano-1-(2,6-dichloro-4-trifluoromethylphenyl)-4-trifluoromethylsulfinylpyrazole.

4. The method as claimed in any one of claims 1 to 3, wherein the insecticidal compound (B) is of formula (II)

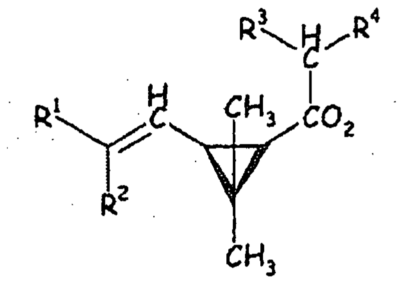

(II)

in which:

$R_1$ and $R_2$ independently represent a $C_1$ to $C_8$ alkyl radical, a $C_1$ to $C_8$ haloalkyl radical, a halogen atom, or a

substituted or unsubstituted phenyl group; and/or
$R_3$ represents a -CN group, a hydrogen atom or a $C_1$ to $C_8$ alkyl radical; and/or
$R_4$ represents a substituted or unsubstituted phenyl group.

**5.** The method as claimed in any one of claims 1 to 4, wherein the insecticidal compound (B) is of formula (II) in which

$R_1$ and $R_2$ independently represent a bromine atom, a chlorine atom, a methyl radical, an isopropyl radical, a para-chlorophenyl radical or a trifluoromethyl radical; and/or
$R_4$ represents a substituted or unsubstituted phenoxybenzyl group.

**6.** The method as claimed in any one of claims 1 to 5, wherein the insecticidal group (B) is of formula (II) in which $R_4$ represents a halophenoxybenzyl group.

**7.** The method as claimed in any one of claims 1 to 6, wherein the insecticidal compound (B) is in the form of a specific isomer or in the form of a mixture of several isomers or in the form of a mixture of several compounds of formula (II).

**8.** The method as claimed in any one of claims 1 to 3 or 7, wherein the insecticidal compound (B) is chosen from the group comprising

bifenthrin or 2-methylbiphenyl-3-ylmethyl (Z)-(1RS,3RS)-3-(2-chloro-3,3,3-trifluoroprop-1-enyl)-2,2-dimethylcyclopropanecarboxylate;
cyfluthrin or (R,S)-α-cyano-4-fluoro-3-phenoxybenzyl (1RS,3RS;1RS,3SR)-3-(2,2-dichlorovinyl)-2,2-dimethylcyclopropanecarboxylate;
cyhalothrin or (R,S)-α-cyano-3-phenoxybenzyl (Z)-(1RS,3RS)-(2-chloro-3,3,3-trifluoropropenyl)-2,2-dimethylcyclopropanecarboxylate;
cypermethrin or (R,S)-α-cyano-3-phenoxybenzyl (1RS,3RS;1RS,3SR)-3-(2,2-dichlorovinyl)-2,2-dimethylcyclopropanecarboxylate;
alpha-cypermethrin or a racemic mixture comprising (S)-α-cyano-3-phenoxybenzyl (1R,3R)-3-(2,2-dichlorovinyl)-2,2-dimethylcyclopropanecarboxylate and (R)-α-cyano-3-phenoxybenzyl (1S,3S)-3-(2,2-dichlorovinyl)-2,2-dimethylcyclopropanecarboxylate;
beta-cypermethrin or a reaction mixture comprising, in a 2:3 ratio, the 2 enantiomeric pairs (S)-α-cyano-3-phenoxybenzyl (1R)-cis-3-(2,2-dichlorovinyl)-2,2-dimethylcyclopropanecarboxylate and (R)-α-cyano-3-phenoxybenzyl (1S)-cis-3-(2,2-dichlorovinyl)-2,2-dimethylcyclopropanecarboxylate with (S)-α-cyano-3-phenoxybenzyl (1R)-trans-3-(2,2-dichlorovinyl)-2,2-dimethylcyclopropanecarboxylate and (R)-α-cyano-3-phenoxybenzyl (1S)-trans-3-(2,2-dichlorovinyl)-2,2-dimethylcyclopropanecarboxylate;
theta-cypermethrin or a mixture of the enantiomers (R)-α-cyano-3-phenoxybenzyl (1S,3R)-3-(2,2-dichlorovinyl)-2,2-dimethylcyclopropanecarboxylate and (S)-α-cyano-3-phenoxybenzyl (1R,3S)-3-(2,2-dichlorovinyl)-2,2-dimethylcyclopropanecarboxylate in a 1:1 ratio;
zeta-cypermethrin or a mixture of the (S)-α-cyano-3-phenoxybenzyl (1RS,3RS;1RS,3SR)-3-(2,2-dichlorovinyl)-2,2-dimethylcyclopropanecarboxylate stereoisomers, in which mixture the ratio of the (S) - (1RS, 3RS) and (S) - (1RS, 3SR) enantiomeric pairs is, respectively, between 45-55 and 55-45;
deltamethrin or (S)-α-cyano-3-phenoxybenzyl (1R,3R)-3-(2,2-dibromovinyl)-2,2-dimethylcyclopropanecarboxylate;
fenpropathrin or (RS)-α-cyano-3-phenoxybenzyl 2,2,3,3-tetramethylcyclopropanecarboxylate;
fenvalerate or (RS)-α-cyano-3-phenoxybenzyl (RS)-2-(4-chlorophenyl)-3-methylbutyrate;
flumethrin or α-cyano-4-fluoro-3-phenoxybenzyl 3-(β,4-dichlorostyryl)-2,2-dimethylcyclopropanecarboxylate;
permethrin or 3-phenoxybenzyl (1RS,3RS;1RS,3SR)-3-(2,2-dichlorovinyl)-2,2-dimethylcyclopropanecarboxylate;
phenothrin or 3-phenoxybenzyl (1RS,3RS;1RS,3SR)-2,2-dimethyl-3-(2-methylprop-1-enyl)cyclopropanecarboxylate in a ratio A/B of between 0.25 and 2.5;
tefluthrin or 2,3,5,6-tetrafluoro-4-methylbenzyl (Z)-(1RS,3RS)-3-(2-chloro-3,3,3-trifluoroprop-1-enyl)-2,2-dimethylcyclopropanecarboxylate;
tralomethrin or (S)-α-cyano-3-phenoxybenzyl (1R,3S)-2,2-dimethyl-3-[(RS)-1,2,2,2-tetrabromoethyl]cyclopropanecarboxylate;
flucythrinate or (RS)-α-cyano-3-phenoxybenzyl (S)-2-(4-difluoromethoxyphenyl)-3-methylbutyrate;
tau-fluvalinate or (RS)-α-cyano-3-phenoxybenzyl N-(2-chloro-α,α,α-trifluoro-p-tolyl)-D-valinate.

**9.** The method as claimed in any one of claims 1 to 8, which is used for the treatment and/or protection of rice, wheat,

barley or rye crops.

**10.** The method as claimed in any one of claims 1 to 9, which is used

for the treatment and/or protection of the plant propagation material or the seeds, in particular the grains, the tubers or the rhizomes; and/or
for the treatment and/or protection of the roots; and/or
for the treatment and/or protection of the stems or the leaves of the plant; and/or
for the treatment and/or protection of the roots or alternatively the fruits or other parts of the plant that have a substantial economic or agronomic value; and/or
for the treatment and/or protection of the soil that is cultivated or is intended to be cultivated.

**11.** The method as claimed in any one of claims 1 to 10, which is used for the treatment and/or protection of plants at numerous stages of their development, in particular for the treatment of seeds, seedlings or planted-out seedlings, planted-out plants, or plants.

**12.** The method as claimed in any one of claims 1 to 11, which is used for combating or controlling insect pests, in particular for combating or controlling insects of the families

*Delphacidae sp.,* in particular *Nilaparvata lugens Nilaparvata, oryzae* and *Sogatella furcifera;* and/or
*Cicadellidae sp.,* in particular *Empoasca decipiens, Nephotettix apicalisi, Nephotettix impicticeps, Nephotettix cincticeps* and *Nilaparvata oryzae;* and/or
*Pyralidae sp.,* in particular *Tryporyza incertulas, Tryporyza innotata*, *Cnaphalocrosis medinalis, Chilo loftini, Chilo suppressalis, Chilo indicus* and *Chilotraea plejadellus;*
*Tylerichidae* sp., in particular *Ditylenchus dipsaci, Ditylenchus angustus* and *Ditylenchus radicicolus;* and/or
*Noctuidae sp.,* in particular *Sesamia interens, Sesamia calamistis, Sesamia cretica* and *Spodoptera litura;* and/or
*Pentatomidae sp.,* in particular *Scotinophara lurida and Scotinophara coarctata; and/or*
*Plutellidae sp.,* in particular *Plutella xylostella;* and/or
*Tortricidae sp*., in particular *Archips breviplicanus;* and/or
*Cecidomyiidae sp.,* in particular *Orselia oryzae* and *Pachydiplosis oryzae.*

**13.** The method as claimed in any one of claims 1 to 12, which is used for controlling or combating soil insects.

**14.** The method as claimed in any one of claims 1 to 13, which is used for controlling or combating insect pests at the various stages of the life or development of the insects, in particular controlling the eggs, the larvae, irrespective of their stage of development, the chrysalids or the nymphs, or alternatively controlling the arthropods or the insects at the adult stage.

**15.** The method as claimed in any one of claims 1 to 14, which uses from 0.5 to 500 g/ha, preferably from 2 to 100 g/ha of insecticidal compound (A) and/or from 0.5 to 1000 g/ha, preferably from 1 to 500 g/ha of insecticidal compound (B); and/or which uses the insecticidal compounds (A) and (B) in a weight ratio A/B of between 0.0005 and 250, preferably between 0.05 and 10; and/or which uses the insecticidal compounds (A) and (B) in a weight ratio B/A of between 0.004 and 2000, preferably between 0.1 and 20.

**16.** The method as claimed in any one of claims 1 to 15, which uses fipronil as compound (A) and deltamethrin or cypermethrin as compound (B) in ratios A/B, respectively, between 0.1 and 5, preferably between 0.5 and 3, for deltamethrin, and between 0.05 and 10, preferably between 0.15 and 6, for cypermethrin.

**17.** A composition that can be used in a method as claimed in any one of claims 1 to 16, which comprises fipronil or 5-amino-3-cyano-1-(2,6-dichloro-4-trifluoromethylphenyl)-4-trifluoromethylsulfinylpyrazole as insecticidal compound (A) and alpha-cypermethrin or a racemic mixture comprising (S)-α-cyano-3-phenoxybenzyl (1R,3R)-3-(2,2-dichlorovinyl)-2,2-dimethylcyclopropanecarboxylate and (R)-α-cyano-3-phenoxybenzyl (1S,3S)-3-(2,2-dichlorovinyl)-2,2-dimethylcyclopropanecarboxylate as insecticidal compound (B), and which comprises the insecticidal compound (A) and the insecticidal compound (B) as the only insecticidal compounds.

**18.** The composition as claimed in claim 17, which comprises between 0.00001% and 100%, preferably between 0.001% and 80%, of insecticidal compounds (A) and (B).

**19.** The composition as claimed in either one of claims 17 and 18, which comprises up to 99% of one or more carriers and/or up to 25% of one or more surfactants and/or up to 25% of one or more formulating agents.

## Patentansprüche

**1.** Verfahren zur Behandlung und für die Bekämpfung von kulturpflanzenschädlichen Arthropoden, **dadurch gekennzeichnet, daß** man für die Behandlung und/oder den Schutz von Getreidekulturen oder Kulturen der Erwerbsgärtnerei sowie für die Behandlung oder den Schutz von Mais, Sorghumhirse, Sonnenblume, Soja oder auch Baumwolle, Erbse, Raps, Kartoffel, Leguminosenkulturen, Zuckerrüben, Zwiebeln, Kohlgewächsen, Tomaten, Bohnen, Salaten, eine insektizide Verbindung (A) der Formel (I), in der die Symbole folgendes bedeuten:

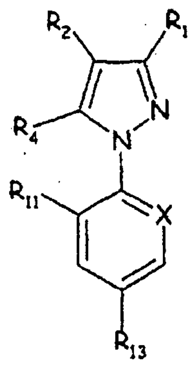

(I)

$R_1$ bedeutet -CN oder den Methylrest oder den $-C(S)NH_2$-Rest oder den -C(=N-Y)Z-Rest;
$R_2$ bedeutet $-S(O)_nR_3$;
$R_3$ bedeutet einen Alkyl- oder Halogenalkylrest;
$R_4$ stammt aus der Gruppe Wasserstoffatom, Halogenatom sowie Rest, bei dem es sich um $-NR_5R_6$, $-C(O)OR_7$, $-S(O)_mR_7$, Alkyl, Halogenalkyl, $-OR_8$, oder -N=C $(R_9)$ $(R_{10})$ handeln kann;
$R_5$ und $R_6$ stammen unabhängig aus der Reihe Wasserstoffatom, Alkylrest, Halogenalkylrest, -C(O)Alkylrest, $-C(O)OR_7$-Rest, $-S(O)_rCF_3$-Rest; oder $R_5$ und $R_6$ können gemeinsam einen zweiwertigen Rest bilden, der durch ein oder mehrere Heteroatome unterbrochen sein kann;
$R_7$ stammt aus der Reihe Alkylrest und Halogenalkylrest;
$R_8$ stammt aus der Reihe Alkylrest, Halogenalkylrest und Wasserstoffatom;
$R_9$ stammt aus der Reihe Wasserstoffatom und Alkylrest;
$R_{10}$ stammt aus der Reihe Phenylrest sowie Heteroarylrest, der gegebenenfalls durch einen oder mehrere der Reste Hydroxy, Halogenatom, -O-Alkylreste, -S-Alkylreste, Cyano oder Alkyl oder eine Kombination dieser Reste substituiert sein kann;
X stammt aus der Reihe Stickstoffatom und $C-R_{12}$-Rest;
Y stammt aus der Reihe der Hydroxy-, Amino-, Aminocarbonyl-, Alkoxy-, Arylcarbonyl-, Alkylcarbonyl-, Alkoxycarbonyl-, Carbamoyl-, Arylcarbamoyl-, Alkylcarbamoyl- und gegebenenfalls substituierten Pyrazolgruppen;
Z stammt aus der Reihe der Hydroxy-, Amino-, Aminocarbonyl-, Alkoxy-, Arylcarbonyl-, Alkylcarbonyl-, Alkoxycarbonyl-, Carbamoyl-, Arylcarbamoyl-, Alkylcarbamoylgruppen;
$R_{11}$ und $R_{12}$ stammen unabhängig aus der Reihe Halogenatom oder Wasserstoffatom
$R_{13}$ stammt aus der Reihe Halogenatom, Halogenalkyl-, Halogenalkoxy-, $-S(O)_qCF_3$- und $-SF_5$-Rest;
m, n, q, r stammen unabhängig aus der Reihe 0, 1 und 2;
mit der Maßgabe, daß, wenn $R_1$ den Methylrest bedeutet, dann $R_3$ einen Halogenalkylrest bedeutet, $R_4$ $-NH_2$ bedeutet, $R_{11}$ Cl bedeutet, $R_{13}$ $-CF_3$ bedeutet und X N bedeutet;
die Alkyl- und Alkoxyreste der Formel (I) sind vorzugsweise Niederalkyl- und Niederalkoxyreste, das heißt die Reste weisen 1 bis 4 Kohlenstoffatome auf;
die Halogenalkyl- und. Halogenalkoxyreste weisen ebenfalls vorzugsweise 1 bis 4 Kohlenstoffatome auf;
die Halogenalkyl- und Halogenalkoxyreste können ein oder mehrere Halogenatome tragen; die bevorzugten Reste dieser Art enthalten $-CF_3$ und $-OCF_3$;
sowie eine insektizide Verbindung (B) der Familie der Pyrethrinoide einsetzt.

2. Verfahren nach Anspruch 1, **dadurch gekennzeichnet, daß** die insektizide Verbindung (A) der Formel (I) entspricht, in der die Symbole folgendes bedeuten:

$R_1$ bedeutet -CN; und/oder
$R_4$ bedeutet $-NR_5R_6$; und/oder
$R_5$ und $R_6$ stammen unabhängig aus der Reihe Wasserstoffatom, Alkylrest, Halogenalkylrest und -C(O)Alkylrest; und/oder
X bedeutet $-C-R_{12}$; und/oder
$R_{13}$ stammt aus der Reihe Halogenatom, Halogenalkylrest, Halogenalkoxyrest und $-SF_5$-Rest.

3. Verfahren nach einem der Ansprüche 1 und 2, **dadurch gekennzeichnet, daß** es sich bei der insektiziden Verbindung (A) um Fipronil oder 5-Amino-3-cyano-1-(2,6-dichlor-4-trifluormethylphenyl)-4-trifluormethylsulfinylpyrazol handelt.

4. Verfahren nach einem der Ansprüche 1 bis 3, **dadurch gekennzeichnet, daß** die insektizide Verbindung (B) der Formel (II) entspricht,

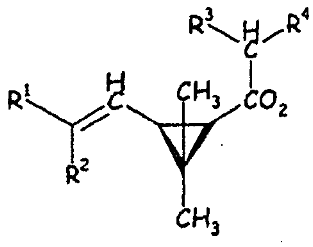

(II)

in der die Symbole die folgenden Bedeutungen aufweisen:

$R_1$ und $R_2$ bedeuten unabhängig einen $C_1$- bis $C_8$-Alkylrest oder einen $C_1$- bis $C_8$-Halogenalkylrest oder ein Halogenatom oder eine gegebenenfalls substituierte Phenylgruppe; und/oder
$R_3$ bedeutet eine -CN-Gruppe oder ein Wasserstoffatom oder einen $C_1$- bis $C_8$-Alkylrest; und/oder
$R_4$ bedeutet eine gegebenenfalls substituierte Phenylgruppe.

5. Verfahren nach einem der Ansprüche 1 bis 4, **dadurch gekennzeichnet, daß** die insektizide Verbindung (B) die Formel (II) aufweist, in der die Symbole die folgenden Bedeutungen aufweisen:

$R_1$ und $R_2$ bedeuten unabhängig ein Bromatom oder ein Chloratom oder einen Methylrest oder einen Isopropylrest oder einen para-Chlorphenylrest oder einen Trifluormethylrest; und/oder
$R_4$ bedeutet eine gegebenenfalls substituierte Phenoxybenzylgruppe.

6. Verfahren nach einem der Ansprüche 1 bis 5, **dadurch gekennzeichnet, daß** die insektizide Verbindung (B) der Formel (II) entspricht, in der $R_4$ eine Halogenphenoxybenzylgruppe bedeutet.

7. Verfahren nach einem der Ansprüche 1 bis 6, **dadurch gekennzeichnet, daß** die insektizide Verbindung (B) in Form eines bestimmten Isomers oder in Form einer Mischung von mehreren Isomeren oder in Form einer Mischung von mehreren Verbindungen der Formel (II) vorliegt.

8. Verfahren nach einem der Ansprüche 1 bis 3 oder 7, **dadurch gekennzeichnet, daß** die insektizide Verbindung (B) aus der folgenden Gruppe stammt:

Bifenthrin bzw. 2-Methylbiphenyl-3-ylmethyl-(Z)-(1RS,3RS)-3-(2-chlor-3,3,3-trifluorprop-1-enyl)-2,2-dimethylcyclopropancarboxylat;
Cyfluthrin bzw. (R,S)-α-Cyano-4-fluor-3-phenoxybenzyl-(1RS,3RS;1RS,3SR)-3-(2,2-dichlorvinyl)-2,2-dimethylcyclopropancarboxylat;
Cyhalothrin bzw. (R,S)-α-Cyano-3-phenoxybenzyl-(Z)-(1RS,3RS)-(2-chlor-3,3,3-trifluorpropenyl)-2,2-dimethylcyclopropancarboxylat;
Cypermethrin bzw. (R,S)-α-Cyano-3-phenoxybenzyl-(1RS,3RS;1RS,3SR)-3-(2,2-dichlorvinyl)-2,2-dimethylcyclopropancarboxylat;
alpha-Cypermethrin oder racemische Mischung, die (S)-α-Cyano-3-phenoxybenzyl-(1R,3R)-3-(2,2-dichlorvinyl)-2,2-dimethylcyclopropancarboxylat und (R)-α-Cyano-3-phenoxybenzyl-(1S,3S)-3-(2,2-dichlorvinyl)-2,2-dimethylcyciopropancarboxylat enthält;
beta-Cypermethrin bzw. Reaktionsmischung, die im Verhältnis 2:3 die beiden Enantiomerenpaare (S)-α-Cyano-3-phenoxybenzyl-(1R)-cis-3-(2,2-dichlorvinyl)-2,2-dimethylcyclopropancarboxylat und (R)-α-Cyano-3-phenoxybenzyl-(1S)-cis-3-(2,2-dichlorvinyl)-2,2-dimethylcyclopropancarboxylat gemeinsam mit (S)-α-Cyano-3-phenoxybenzyl-(1R)-trans-3-(2,2-dichlorvinyl)-2,2-dimethylcyclopropancarboxylat und (R)-α-Cyano-3-phenoxybenzyl-(1S)-trans-3-(2,2-dichlorvinyl)-2,2-dimethylcyclopropancarboxylat enthält;
theta-Cypermethrin bzw. Mischung der Enantiomere (R)-α-Cyano-3-phenoxybenzyl-(1S,3R)-3-(2,2-dichlorvinyl)-2,2-dimethylcyclopropancarboxylat und (S)-α-Cyano-3-phenoxybenzyl-(1R,3S)-3-(2,2-dichlorvinyl)-2,2-dimethylcyclopropancarboxylat im Verhältnis 1:1;
zeta-Cypermethrin bzw. Mischung der Stereoisomeren von (S)-a-Cyano-3-phenoxybenzyl-(1RS,3RS;1RS,3SR)-3-(2,2-dichlorvinyl)-2,2-dimethylcyclopropancarboxylat, wobei in dieser Mischung das Verhältnis der Enantiomerenpaare (S)-(1RS,3RS) und (S)-(1RS,3SR) zwischen 45-55 und 55-45 liegt;
Deltamethrin bzw. (S)-α-Cyano-3-phenoxybenzyl-(1R,3R)-3-(2,2-dibromvinyl)-2,2-dimethylcyclopropancarboxylat;
Fenpropathrin bzw. (RS)-α-Cyano-3-phenoxybenzyl-2,2,3,3-tetramethylcyclopropancarboxylat;
Fenvalerat bzw. (RS)-α-Cyano-3-phenoxybenzyl-(RS)-2-(4-chlorphenyl)-3-methylbutyrat;
Flumethrin bzw. α-Cyano-4-fluor-3-phenoxybenzyl-3-(β,4-dichlorstyryl)-2,2-dimethylcyclopropancarboxylat;
Permethrin bzw. 3-Phenoxybenzyl-(1RS,3RS;1RS,3SR)-3-(2,2-dichlorvinyl)-2,2-dimethylcyclopropancarboxylat;
Phenothrin bzw. 3-Phenoxybenzyl-(1RS,3RS;1RS,3SR)-2,2-dimethyl-3-(2-methylprop-1-enyl)cyclopropancarboxylat im Verhältnis A/B zwischen 0,25 und 2, 5;
Tefluthrin bzw. 2,3,5,6-Tetrafluor-4-methylbenzyl-(Z)-(1RS,3RS)-3-(2-chlor-3,3,3-trifluorprop-1-enyl)-2,2-dimethylcyclopropancarboxylat;
Tralomethrin bzw. (S)-α-Cyano-3-phenoxybenzyl-(1R,3S)-2,2-dimethyl-3-[(RS)-1,2,2,2-tetrabromethyl]cyclopropancarboxylat;
Flucythrinat bzw. (RS)-α-Cyano-3-phenoxybenzyl-(S)-2-(4-difluormethoxyphenyl)-3-methylbutyrat;
tau-Fluvalinat bzw. (RS)-α-Cyano-3-phenoxybenzyl-N-(2-chlor-α,α,α-trifluor-p-tolyl)-D-valinat.

**9.** Verfahren nach einem der Ansprüche 1 bis 8, **dadurch gekennzeichnet, daß** es für die Behandlung und/oder den Schutz von Reis-, Weizen-, Gerste- oder Roggenkulturen eingesetzt wird.

**10.** Verfahren nach einem der Ansprüche 1 bis 9, **dadurch gekennzeichnet, daß** es

für die Behandlung und/oder den Schutz von vegetativem Vermehrungsmaterial oder von Sämereien, insbesondere Samen, Knollen oder Rhizomen; und/oder
für die Behandlung und/oder den Schutz von Wurzeln; und/oder
für die Behandlung und/oder den Schutz von Stengeln oder Blättern der Pflanze; und/oder
für die Behandlung und/oder den Schutz von Wurzeln oder auch von Früchten oder sonstigen Teilen der Pflanze mit einem gewissen ökonomischen oder agronomischen Wert; und/oder
für die Behandlung und/oder den Schutz des bebauten Bodens bzw. des zu bebauenden Bodens eingesetzt wird.

**11.** Verfahren nach einem der Ansprüche 1 bis 10, **dadurch gekennzeichnet, daß** es für die Behandlung und/oder den Schutz von Pflanzen in zahlreichen Entwicklungsstadien, insbesondere für die Behandlung von Sämereien, Saatgut oder Pflanzgut oder Setzlingen oder auch Pflanzen eingesetzt wird.

**12.** Verfahren nach einem der Ansprüche 1 bis 11, **dadurch gekennzeichnet, daß** es für die Bekämpfung oder Kontrolle von Schadinsekten, insbesondere für die Bekämpfung oder Kontrolle von Insekten der folgenden Familien eingesetzt wird:

*Delphacidae sp.,* insbesondere *Nilaparvata lugens Nilaparvata, oryzae* und *Sogatella furcifera;* und/oder
*Cicadellidae sp.* insbesondere *Empoasca decipiens, Nephotettix apicalisi, Nephotettix impicticeps, Nephotettix cincticeps* und *Nilaparvata oryzae;* und/oder
*Pyralidae sp.,* insbesondere *Tryporyza incertulas, Tryporyza innotata, Cnaphalocrosis medinalis, Chilo loftini,*

*Chilo suppressalis, Chilo indicus* und *Chilotraea plejadellus;*
*Tylenchidae sp.,* insbesondere *Ditylenchus dipsaci, Ditylenchus angustus* und *Ditylenchus radicicolus;* und/oder
*Noctuidae sp.,* insbesondere *Sesamia interens, Sesamia calamistis, Sesamia cretica* und *Spodoptera litura;* und/oder
*Pentatomidae sp.* insbesondere *Scotinophara lurida* und *Scotinophara coarctata;* und/oder
*Plutellidae sp.* insbesondere *Ptutella xylostella;* und/oder
*Tortricidae sp.* insbesondere *Archips breviplicanus;* und/oder
*Cecidomyiidae sp.* insbesondere *Orselia oryzae* und *Pachydiplosis oryzae.*

**13.** Verfahren nach einem der Ansprüche 1 bis 12, **dadurch gekennzeichnet, daß** es für die Kontrolle oder Bekämpfung von Bodeninsekten eingesetzt wird.

**14.** Verfahren nach einem der Ansprüche 1 bis 13, **dadurch gekennzeichnet, daß** es für die Kontrolle oder die Bekämpfung von Schadinsekten in unterschiedlichen Lebens- oder Entwicklungsstadien der Insekten, insbesondere gegen die Eier, Larven, egal in welchem Entwicklungsstadium, Puppen oder Nymphen, oder auch gegen Arthropoden oder Insekten im Adultenstadium, eingesetzt wird.

**15.** Verfahren nach einem der Ansprüche 1 bis 14, **dadurch gekennzeichnet, daß** man 0,5 bis 500g/ha, vorzugsweise 2 bis 100 g/ha, insektizide Verbindung (A) und/oder 0,5 bis 1000 g/ha, vorzugsweise 1 bis 500 g/ha der insektiziden Verbindung (B) einsetzt; und/oder daß man die insektiziden Verbindungen (A) und (B) in einem Gewichtsverhältnis A/B zwischen 0,0005 und 250, vorzugsweise zwischen 0,05 und 10, einsetzt; und/oder daß man die insektiziden Verbindungen (A) und (B) in einem Gewichtsverhältnis B/A zwischen 0,004 und 2000, vorzugsweise zwischen 0,1 und 20, einsetzt.

**16.** Verfahren nach einem der Ansprüche 1 bis 15, **dadurch gekennzeichnet, daß** man als Verbindung (A) Fipronil und als Verbindung (B) Deltamethrin oder Cypermethrin einsetzt, und zwar in einem A/B-Verhältnis zwischen 0,1 und 5, vorzugsweise. 0,5 und 3, bei Deltamethrin sowie zwischen 0,05 und 10, vorzugsweise zwischen 0,15 und 6, bei Cypermethrin.

**17.** Zusammensetzung, die in einem Verfahren nach einem der Ansprüche 1 bis 16 verwendet werden kann, **dadurch gekennzeichnet, daß** sie als insektizide Verbindung (A) Fipronil bzw. 5-Amino-3-cyano-1-(2,6-dichlor-4-trifluormethylphenyl)-4-trifluor-methylsulfinylpyrazol und als insektizide Verbindung (B) alpha-Cypermethrin oder eine racemische Mischung, die (S)-α-Cyano-3-phenoxybenzyl-(1R,3R)-3-(2,2-dichlorvinyl)-2,2-dimethylcyclopropancarboxylat und (R)-a-Cyano-3-phenoxybenzyl-(1S,3S)-3-(2,2-dichlorvinyl)-2,2-dimethylcyclopropancarboxylat umfaßt und daß sie die insektizide Verbindung (A) und die insektizide Verbindung (B) als einzige insektizide Verbindungen umfaßt.

**18.** Zusammensetzung nach Anspruch 17, **dadurch gekennzeichnet, daß** sie zwischen 0,00001 und 100%, vorzugsweise zwischen 0,001 und 80%, insektizide Verbindungen (A) und (B) umfaßt.

**19.** Zusammensetzung nach einem der Ansprüche 17 und 18, **dadurch gekennzeichnet, daß** sie bis zu 99% an einem oder mehreren Trägerstoffen und/oder bis zu 25% an einem oder mehreren Tensiden und/oder bis zu 25% an einem oder mehreren Formulierungsmitteln umfaßt.